## Europäisches Patentamt
## European Patent Office
## Office européen des brevets

(11) Veröffentlichungsnummer: **0 173 171**
**B1**

(12)
# EUROPÄISCHE PATENTSCHRIFT

(45) Veröffentlichungstag der Patentschrift:
18.01.89

(51) Int. Cl.⁴: **H04L 11/00, G06F 13/14**

(21) Anmeldenummer: **85110214.5**

(22) Anmeldetag: **14.08.85**

(54) **Verfahren und Anordung zur Steuerung des Zugriffs zu einer Gruppe von gemeinsam nutzbaren Einrichtungen als Poolelemente in einem Datenverarbeitungs- oder Kommunikationssystem.**

(30) Priorität: **16.08.84 DE 3430171**

(43) Veröffentlichungstag der Anmeldung:
**05.03.86 Patentblatt 86/10**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
EP-A- 0 094 841
DE-A- 3 311 043

**IEEE TRANSACTIONS ON COMMUNICATIONS, Band COM-29, Nr. 4, April 1981, Seiten 413-426, IEEE, New York, US; L. POUZIN: "Methods, tools, and observations on flow control in packet-switched data networks"**
**PATENTS ABSTRACTS OF JAPAN, Band 8, Nr. 161 (E-257) [1598], 26. Juli 1984; & JP - A - 59 61 336**
**IEEE TRANSACTIONS ON COMMUNICATIONS, Band COM-28, Nr. 4, April 1980, Seiten 553-574, IEEE, New York, US; M. GERLA et al.: "Flow control: A comparative survey"**

(73) Patentinhaber: **Siemens Aktiengesellschaft Berlin und München, Wittelsbacherplatz 2, D-8000 München 2(DE)**

(72) Erfinder: **Hülters, Hubert, Von-Eichendorff-Strasse 14, D-8152 Feldkirchen/Westerham(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Verfahren und Anordnung zur Steuerung des Zugriffs zu einer Gruppe von gemeinsam nutzbaren Einrichtungen als Poolelemente in einem Datenverarbeitungs- oder Kommunikationssystem entsprechend den Merkmalen des Oberbegriffes des Patentanspruches 1.

Überall da, wo aus Aufwandsgründen nur eine begrenzte Anzahl von Einrichtungen, z.B. Verbindungsleitungen, Speichereinheiten, Arbeitszeiteinheiten eines Prozessors, von einer Anzahl von Benutzern oder Prozessen gemeinsam benutzt werden, stellt sich das Problem der zeitweiligen Zuordnung der gemeinsam nutzbaren Einrichtungen zu den einen Belegungswunsch anmeldenden Benutzereinrichtungen. Dabei ist sicherzustellen, daß die gemeinsamen Einrichtungen optimal genutzt und einigermaßen gleichmäßig den miteinander konkurrierenden Benutzern zugeteilt werden, ohne daß bei zunehmender Belastung des Systems durch die Benutzer eine Verringerung des Wirkungsgrades gegeben ist bzw. daß Systemverklemmungen auftreten.

Im allgemeinen wird der Zugriff zu den gemeinsam nutzbaren Einrichtungen in der Weise gesteuert, daß der Benutzer mit einer Anfrage an die Verwaltungssteuerung der Poolelemente seinen Belegungswunsch äußert und auf eine Antwort oder Rückmeldung wartet. Die Verwaltungssteuerung überwacht die gestellten Anfragen und prüft, ob ein Poolelement frei ist und einer der Anfragen zugeordnet werden kann. Dabei kann unabhängig von der Verfügbarkeit der gemeinsamen Einrichtungen jede Anfrage mit einer Rückmeldung beantwortet werden. Dies führt aber bei Abweisung von Anfragen mit einer negativen Rückmeldung fortlaufend zu wiederholten Anfragen, bis eine positive Rückmeldung dem anfragenden Benutzer mitteilt, daß die gewünschte Einrichtung frei ist und benutzt werden kann, wobei die Benutzungseinräumung vielfach nur auf eine vorgegebene Zeitdauer beschränkt ist.

Wiederholte vergebliche Anfragen aber belasten das System unnötig, weil zusätzlich Leitungen belegt werden und/oder Prozessorleistung und Speicherkapazität verbraucht werden, so daß vielfach keine negativen, sondern nur positive Rückmeldungen gegeben werden. Der Benutzer muß dann solange mit der Durchführung seiner Aufgabe warten, bis seine Anfrage positiv beantwortet ist.

Einzelheiten hierzu sind mit Bezug auf ein Prozessorsystem mit mehreren gemeinsam genutzten Speichereinheiten beispielsweise der europäischen Patentanmeldung Nr. 0 094 841 zu entnehmen. Ähnliches gilt auch für Verbindungsleitungen oder Übertragungskanäle von Vermittlungsnetzwerken, die nur in begrenzter Anzahl zur Verfügung stehen und wahlweise jedem einer Gruppe von angeschlossenen Benutzern zugeordnet werden können.

Vielschichtiger stellen sich die Probleme, wenn statt einer einzigen Gruppe von gemeinsam nutzbaren Einrichtungen mehrere solcher Gruppen in Serie zusammenwirken, wie zum Beispiel in Kommunikationsnetzwerken mit mehreren Knoten zwischen Verarbeitungsquelle und Verarbeitungssenke, da sich hierbei neben dem Problem der reinen Zugriffssteuerung weitere Probleme der allgemeinen Datenflußsteuerung ergeben und zusätzliche Maßnahmen erforderlich sind. Eine allgemeine Übersicht über die Probleme der Datenflußsteuerung und der Maßnahmen zu ihrer Bewältigung ist in IEEE Transactions On Communications, Vol. COM-28, No. 4, April 1980, Seiten 553 bis 574, gegeben.

Abgesehen davon, daß bei augenblicklich unzureichender Kapazität an Poolelementen die Annahme von Anfragen abgeblockt und auf einen späteren Zeitpunkt verschoben wird, werden mit der Annahme einer Anfrage vorgegebene Sendekredite für den Nutzdatenumfang eingeräumt, die durch weitere Rückmeldungen erneuert werden und abhängig von den verfügbaren Kapazitäten in den einzelnen Knoten und der Verarbeitungssenke eingeschränkt oder erweitert werden können, wobei bei vorübergehender Überlast die Rückmeldungen entsprechend verzögert werden.

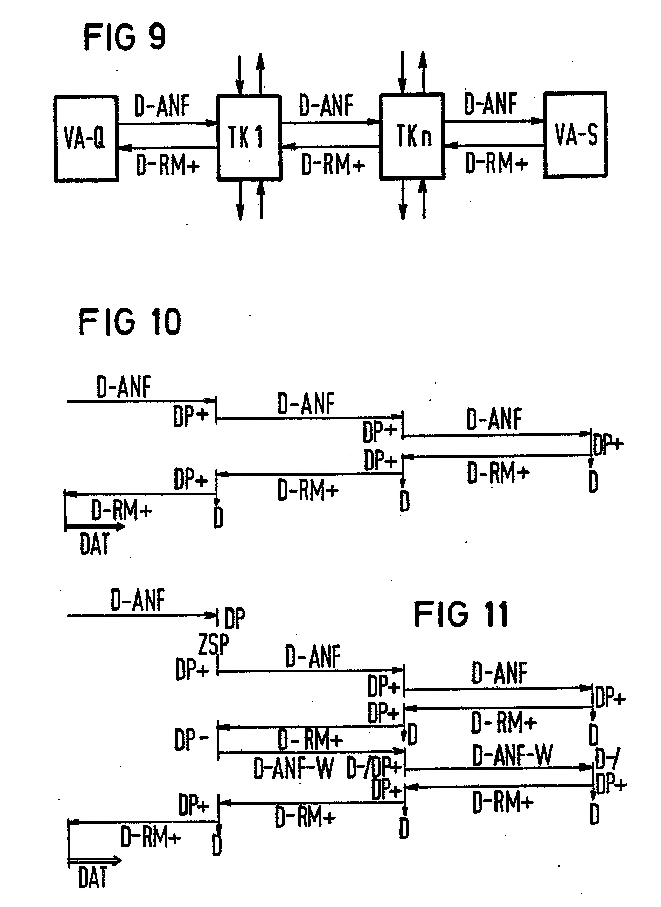

Die Maßnahmen zur Datenflußsteuerung können dabei global oder auch nur örtlich wirken. Am umfassendsten wirkt die "end-to-end"-Steuerung für den Transport von Steuer- und Nutzdaten von über das Netzwerk zusammenarbeitenden Benutzerprozessen – insbesondere genannte IEEE Transactions, Fig. 9, auf S. 558 und Abschn. VI auf S.571 ff. und auch IEEE TRANSACTIONS ON COMMUNICATIONS, Band COM-29, Nr. 4, April 1981, Seiten 413–426, wo der mittlere oder maximale Datendurchsatz der Teilnehmer zur Verwaltung von Poolelementen herangezogen wird.

Von Nachteil bei all diesen bekannten Steuerungsmechanismen mit Rückmeldung ist, daß mit der Abgabe der Rückmeldung in den einzelnen Gruppen von Poolelementen die benötigten Poolelemente bereits einer Verbindung oder dem einer Anfrage zugrunde liegenden Auftrag fest zugeordnet und belegt werden und damit nicht mehr zwischenzeitlich verfügbar sind, wenn sich die tatsächliche Benutzung der zugeteilten Poolelemente verzögert. Das schränkt die optimale Nutzung des Systems ein und führt mit zunehmender Last eher zur Verringerung des Wirkungsgrades, wenn die Anzahl der jeweils zur Verführung stehenden Poolelemente nicht ausreichend groß angesetzt ist.

Es ist daher Aufgabe der Erfindung, ausgehend von Verfahren der eingangs genannten Art und entsprechenden Anordnungen zu deren Durchführung diese so zu gestalten, daß bei minimaler Bemessung der Anzahl von Poolelementen diese infolge weitgehender Vermeidung unnötiger Blockierungen optimal genutzt werden und daß bei einem Überangebot von Anfragen der Wirkungsgrad des Systems nicht merklich beeinflußt wird.

Diese Aufgabe wird bei der Erfindung durch die kennzeichnenden Merkmale des Patentanspruches 1 gelöst.

Die Erfindung macht sich dabei zunutze, daß bei den meisten auszuführenden Aufgaben eines Benutzers oder eines Prozesses bereits zu Beginn bekannt ist, welche Zeitdauer dafür benötigt wird und/oder welche Datenmenge zu übertragen und/oder zu verarbeiten ist. So läßt sich beispielsweise aus einer vorgegebenen Datenmenge bei einer vorgegebenen Übertragungsgeschwindigkeit für den benutzten Übertragungsweg dessen Belegungsdauer für die Übertragung der vorgegebenen Datenmenge in einfacher Weise ableiten und damit das den zeitlichen Belegungsumfang darstellende Benutzungsprofil für den Übertragungsweg ermitteln, z.B. die Belegung eines Kanals eine bestimmte Dauer. Ebenso lassen sich aus der Datenmenge die Anzahl der beispielsweise für eine Zwischenspeicherung benötigten Speichereinheiten und in Verbindung mit der Übertragungsgeschwindigkeit auch die Zeitpunkte ihrer Inanspruchnahme abschätzen, was zu einem treppenförmig ansteigenden Benutzungsprofil entsprechend dem mit der Zeit zunehmenden Belegungsumfang führt.

Anhand solcher von den diesbezüglichen Angaben der Anfragen ableitbaren, den Belegungsumfang je Zeiteinheit bestimmender Benutzungsprofile kann nun in sehr einfacher Weise durch Überlagerung ein Gesamtbenutzungsprofil aller genehmigten Anfragen erstellt werden, das über einen vorgegebenen Zeitraum vorausschauend den zeitlichen Verlauf des zu erwartenden Belegungsumfanges der Poolelemente und damit die je Zeiteinheit noch verfügbaren Poolelemente erkennen läßt. Solange für jede dieser Zeiteinheiten die Anzahl der verfügbaren Poolelemente größer ist als die Anzahl der für dieselbe Zeiteinheit benötigten Poolelemente des neuen Benutzungsprofils kann eine Frage mit einer positiven Rückmeldung beantwortet werden. Umgekehrt lassen sich bei Ausschöpfung aller Poolelemente über eine längere Zeit durch die vorausschauende Überwachung frühzeitig Maßnahmen zur Sperrung der Annahme von Anfragen ableiten, so daß der Zugang zum System ohne wesentliche Belastung desselben blockiert werden kann.

Ein weiterer wesentlicher Unterschied zum Stand der Technik ergibt sich aus der Tatsache, daß das Gesamtbenutzungsprofil nur zur Disposition, nicht aber bereits zur Belegung und Sperrung der Poolelemente dient. Es wird also anhand des Gesamtbenutzungsprofils nur geprüft, ob die für die Ausführung des einer Anfrage zugrunde liegenden Auftrags zu den verschiedenen Zeitpunkten benötigten Poolelemente voraussichtlich zur Verfügung stehen werden. Die eigentliche Belegung und Sperrung erfolgt dagegen erst entsprechend dem tatsächlichen Bedarf. Dadurch wird vermieden, daß Poolelemente infolge von Verzögerungen bei der Auftragsabwicklung ungenutzt das System belasten, weil sie dem Auftrag nicht mehr entzogen und daher keinem anderen Auftrag zugeordnet werden können, für den gerade ein Bedarf besteht.

Infolge der gegenüber der realen Menge von Poolelementen frei wählbaren Dispositionsmenge von Poolelementen besteht zudem in einfacher Weise die Möglichkeit, eine Reserve an realen Poolelementen bereitzuhalten, um Überlastfälle bei ins Gewicht fallenden Zeitverschiebungen zwischen Disposition und tatsächlicher Abwicklung der Aufträge abfangen zu können, was bei im Vorgriff erfolgender fester Zuordnung realer Poolelemente nur durch entsprechende Überplanung der Poolelementmenge mit entsprechend geringerer durchschnittlicher Nutzung möglich ist.

Weiterbildungen der Erfindung bezüglich der Behandlung von nicht sofort mit einer positiven Rückmeldung beantwortbaren Anfragen ergeben sich aus den Patentansprüchen 2 bis 7.

Ausgehend von dem vorangehend erläuterten Lösungsprinzip ist auch eine Anwendung bei mehreren in Reihe wirksamen getrennten Gruppen von Poolelementen, insbesondere bei Gruppen von Poolelementen in verschiedenen Knoten eines Kommunikationsnetzwerkes möglich, bei dem die Anforderungen nacheinander von Gruppe zu Gruppe bis zur gewünschten Zielgruppe weitergeleitet werden und eine Rückmeldung erst nach Annahme der Anforderung von allen Gruppen auf dem Wege bis zur Zielgruppe von dieser aus in Gegenrichtung bis zur anfragenden Einrichtung zurückgesandt wird. Eine entsprechende Weiterbildung des der Erfindung zugrundeliegenden Lösungsprinzips ergibt sich aus den kennzeichnenden Merkmalen des Patentanspruches 8.

Danach erfolgt in den einzelnen Gruppen von Poolelementen zunächst nur eine Kontrolldisposition ohne sofortige Änderung des vorliegenden Gesamtbenutzungsprofils, und erst die von der Zielgruppe ausgelöste rücklaufende positive Rückmeldung führt zu einer Berücksichtigung des Benutzungsprofils der laufenden Anfrage im jeweiligen Gesamtbenutzungsprofil. Auf diese Weise werden unnötige Änderungen des Gesamtbenutzungsprofils von vornherein vermieden, falls eine Anfrage die gewünschte Zielgruppe aus irgendeinem Grunde nicht erreichen sollte.

Weiterbildungen dieses Lösungsprinzips ergeben sich aus den Patentansprüchen 9 bis 13, wobei insbesondere durch die Lösungsmerkmale des Patentanspruches 13 verhindert wird, daß bei einem von der positiven Rückmeldung ausgelösten Dispositionsvorgang mit negativem Prüfungsergebnis die Anfrage abgewiesen werden muß. Die Rückmeldung wird vielmehr in eine Wiederholanfrage umgewandelt und erneut zur Zielgruppe weitergeleitet, wobei die mit der Rückmeldung gelieferte Angabe über den Dispositionszeitpunkt der Zielgruppe eine vorherige Bereinigung des bereits geänderten Gesamtbenutzungsprofils und damit eine Anpassung an die tatsächlichen Belegungserwartungen ermöglicht. Eine Anfrage kann so bei hoher Auslastung des Netzwerkes unter Umständen mehrmals zwischen Senke und vorgeschalteten Transitknoten hin- und herlaufen, bis die Disposition überall zum positiven Ergebnis führt, wobei die damit verbundene Belastung durch die ausbleibende tatsächliche Belegung der bereits disponierten Poolelemente weitgehend aufgefangen wird.

Im Gegensatz zu diesen allgemeinen Lösungsprinzipien beziehen sich Patentanspruch 14 mit den rückbezogenen Patentansprüchen 15 bis 17 auf den allgemeinen Ablauf des eigentlichen Dispositionsvorganges mit verschiedenen Varianten, Patentspruch 18 auf die Erstellung der Benutzungsprofile mit variablem Belegungsumfang und Patentanspruch 19 auf eine Verfahrensvariante für Kommunikationsnetzwerke mit strukturierten Funktions- und Protokollschichten.

Die Ansprüche 20 bis 27 betreffen schließlich Anordnungen gemäß der Erfindung zur Durchführung der einzelnen Verfahren gemäß der Erfindung, wobei Patentanspruch 20 die Grundanordnung festlegt, die gemäß den restlichen Patentansprüchen 21 bis 27 entsprechend den verschiedenen Verfahrensvarianten ergänzt werden kann.

Einzelheiten der Erfindung seien nachfolgend anhand von in der Zeichnung dargestellten Ausführungsbeispielen näher erläutert. Im einzelnen zeigen:

Fig. 1 die prinzipielle Darstellung einer Reihe von Benutzern eines einstufigen Vermittlungsnetzwerkes mit Zugriff zu zwei Gruppen oder Bündeln von Übertragungskanälen als Poolelemente,

Fig. 2 ein Diagramm für den zeitlichen Verlauf des Belegungsumfanges für eine der Gruppen von Übertragungskanälen gemäß Fig. 1,

Fig. 3 die reale Belegung der einzelnen Übertragungskanäle entsprechend dem zeitlichen Verlauf des Belegungsumfanges nach Fig. 2,

Fig. 4 ein Benutzungsprofil mit zeitlich sich änderndem Belegungsumfang oder Bedarf an Speichereinheiten als Poolelemente für die reine Datenübertragung,

Fig. 5 ein Benutzungsprofil in Anlehnung an das von Fig. 4 mit zusätzlicher Verarbeitung der Daten während der Übertragung,

Fig. 6 ein aus Benutzungsprofilen gemäß Fig. 4 und Fig. 5 sich durch Überlagerung ergebendes Gesamtbenutzungsprofil,

Fig. 7 ein Blockschaltbild zur Durchführung der Disposition gemäß der Erfindung,

Fig. 8 ein zugehöriges Flußdiagramm,

Fig. 9 ein Prinzipschaltbild zur Erläuterung des Verfahrens gemäß der Erfindung bei mehreren in Reihe wirksamen Gruppen von Poolelementen,

Fig. 10 und 11 zugehörige Ablaufdiagramme für die Weiterleitung der Anfragen und Rückmeldungen für verschiedene Betriebsfälle und

Fig. 12 ein Prinzipschaltbild für ein Kommunikationsnetzwerk mit Schichtstruktur zur Erläuterung der "end-to-end"-Steuerwirkung.

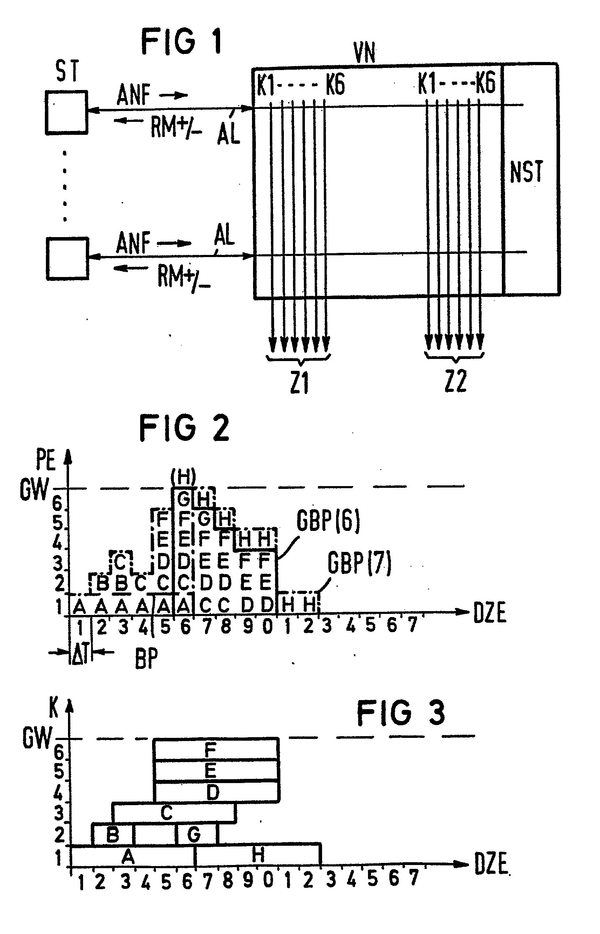

Fig. 1 zeigt als einfaches Beispiel für eine Gruppe von gemeinsam nutzbaren Einrichtungen als gemeinsam verwaltete Poolelemente ein Vermittlungsnetzwerk VN, an das mehrere Teilnehmer oder Benutzer ST über Anschlußleitungen AL angeschlossen sind, wobei die einzelnen Anschlußleitungen AL wahlweise mit einem von jeweils sechs Kanälen K1 bis K6 der zu zwei getrennten Zielen Z1 bzw. Z2 führenden Kanalbündel verbunden werden können, indem z.B. in an sich bekannter Weise an den Kreuzungspunkten der horizontal verlaufenden Anschlußleitungen AL mit den senkrecht verlaufenden Kanälen befindliche Schalter geschlossen werden. Zu jedem Ziel, z.B. Z1, sind daher unter der Aufsicht einer Netzwerksteuerung NST gleichzeitig jeweils sechs verschiedene Verbindungen möglich.

Zur Herstellung einer gewünschten Verbindung meldet sich ein Benutzer ST zunächst mit einer Anfrage ANF bei der Netzwerksteuerung NST und meldet damit seine Wünsche für eine Verbindung zu einem bestimmten Ziel an. Die Steuerung NST überwacht fortlaufend, z.B. durch zyklisches Prüfen der Anschlußleitungen AL, das Vorliegen von Anfragen durch irgendeinen der Benutzer, und nach Erkennen einer solchen Anfrage überprüft sie, ob einer der Kanäle zu dem gewünschten Ziel frei ist. Ist dieses der Fall, so wird der betreffende Kanal belegt und damit gegen weitere Belegungen gesperrt sowie die erfolgte Durchschaltung der Anschlußleitung AL zu dem gewünschten Ziel dem anfragenden Benutzer durch eine positive Rückmeldung RM+ mitgeteilt, so daß dieser die geplante Aufgabe, z.B. Austausch von Informationen mit einem anderen Benutzer am gewünschten Ziel usw., ausführen kann.

Ist dagegen eine Verbindung zum gewünschten Ziel augenblicklich nicht durchführbar, so erhält der anfragende Benutzer ST entweder eine negative Rückmeldung RM-, die eine Wiederholung der Anfrage ANF erfordert, wenn der Benutzer das gewünschte Ziel erreichen will, oder aber der Benutzer erhält zunächst keine Rückmeldung und muß warten, bis eine positive Rückmeldung RM+ eintrifft.

Im vorliegenden Falle handelt es sich bei den gemeinsam nutzbaren Einrichtungen um Übertragungskanäle K, wobei es gleichgültig ist, ob diese in an sich bekannter Weise durch individuelle Verbindungsleitungen oder durch eine gemeinsame, im Multiplexbetrieb betriebene Verbindungsleitung mit mehreren Übertragungskanälen bereitgestellt werden.

Übertragungskanäle arbeiten z.B. in der Regel mit einer vorgegebenen Datenübertragungsgeschwindigkeit. Ist die zu übertragende Datenmenge daher bekannt, läßt sich leicht berechnen, wielange ein Übertragungskanal voraussichtlich belegt sein wird. Wird der Netzwerksteuerung NST daher zusammen mit der Anfrage ANF zusätzlich eine Angabe über die geplante Datenmenge geliefert, kann diese daraus ohne weiteres ein sich für die jeweilige Anfrage ergebendes Benutzungsprofil ermitteln, nämlich die Belegung eines Kanals für eine vorgegebene Dauer. Die Belegungsdauer kann dabei in Vielfache einer vorgegebenen Zeiteinheit gegliedert sein, wobei je Zeiteinheit jeweils nie mehr Kanäle vergeben werden können, als tatsächlich vorhanden sind.

Überlagert man die sich aus den einzelnen Anfragen ANF ergebenden Benutzungsprofile rein additiv nach den vorgegebenen Zeiteinheiten gegliedert, so erhält man rückschauend den zeitlichen Verlauf des Belegungsumfanges der als Poolelemente zur Verfügung stehenden Kanäle. Dasselbe Prinzip kann aber auch gemäß der Erfindung vorausschauend für eine Disposition der Poolelemente und damit als Steuerungselement verwandt werden.

Fig. 2 zeigt strichpunktiert den zeitlichen Verlauf eines angenommenen Belegungsumfanges für ein Kanalbündel der Anordnung von Fig. 1. Über eine aus Zeitelementen DZE entsprechend jeweils einer Zeiteinheit ΔT zusammengesetzten Zeitachse ist je-

weils die Anzahl der je Zeiteinheit belegten Poolelemente aufgetragen, wobei entsprechend dem Beispiel von Fig. 1 maximal sechs Poolelemente zur Verfügung stehen, was durch die gestrichelte Linie für den Grenzwert GW angedeutet ist. Die während des ersten Zeitelementes DZ1 gestellte Anfrage A beansprucht sechs Zeitelemente entsprechend dem gestrichelt angedeuteten zugehörigen Benutzungsprofil BP. Vorausschauend vom Zeitelement DZE1 ausgehend, bleibt also bis einschließlich des Zeitelementes DZE6 ein Kanal belegt. Während der nachfolgenden Zeiteinheiten kommen weitere Anfragen B bis H hinzu, deren Benutzungsprofile jeweils dem augenblicklich vorhandenen Gesamtbenutzungsprofil überlagert werden. Während des Zeitelementes DZE6 fallen zwei Anfragen G und H an. Jedoch kann nur eine dieser Anfragen, z.B. G, berücksichtigt werden, da sonst der vorgegebene Grenzwert GW überschritten würde. Damit ergibt sich z.B. das mit dem sechsten Zeitelement DZE6 beginnende und bis zum zehnten Zeitelement DZE0 reichende, durch eine ausgezogene Linie gekennzeichnete Gesamtbenutzungsprofil GBP$_{(6)}$, dem mit Beginn des Zeitelementes DZE7 das Gesamtbenutzungsprofil GBP$_{(7)}$ folgt.

Durch Überlagerung der mit jeder angenommenen Anfrage ANF verbundenen Benutzungsprofile BP kann man also in die Zukunft schauend durch Erstellen des Gesamtbenutzungsprofiles GBP den voraussichtlichen zeitlichen Verlauf des Belegungsumfanges für die Poolelemente erfassen.

Dieser durch das Gesamtbenutzungsprofil GBP vorgegebene Belegungsumfang sagt jedoch nichts über die tatsächliche Zuordnung einer Anfrage ANF zu einem bestimmten Übertragungskanal K... aus, wie in Gegenüberstellung Fig. 3 für dieselbe Anfragenfolge A bis H mit gleichen Benutzungsprofilen BP wie bei Fig. 2 zeigt, wobei die gestrichelten waagerechten Balken die Belegungsdauer jeweils eines der Kanäle K1 bis K6 durch eine der Anfragen A bis H kennzeichnen.

Daher ist es auch nicht notwendig, wie bisher bei der Bearbeitung einer Anfrage bereits die benötigten Poolelemente zu belegen und der Anfrage fest zuzuordnen, sondern es genügt, allein zu prüfen, ob die zu einem bestimmten Zeitelement benötigten Poolelemente voraussichtlich verfügbar sein werden. Die tatsächliche Belegung kann dann entsprechend dem anfallenden Bedarf erfolgen. Es wird also zunächst nur disponiert.

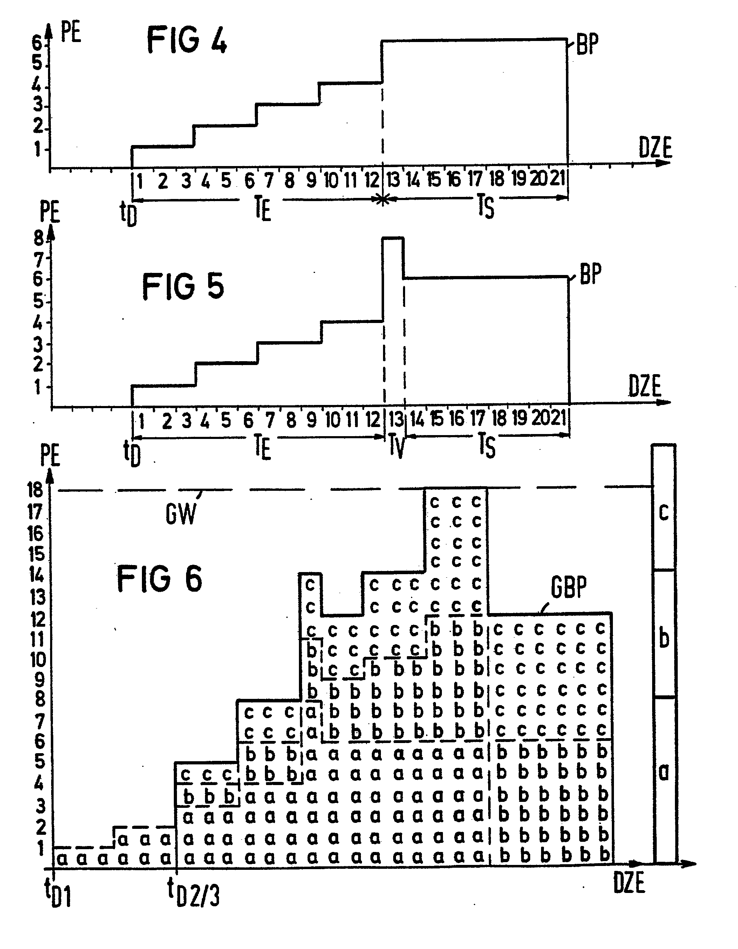

Dies ist besonders dann von Vorteil, wenn die Benutzungsprofile im Gegensatz zu dem anhand von Fig. 1 bis Fig. 3 erläuterten Beispiel anstelle eines konstanten Belegungsumfanges einen variablen Belegungsumfang aufweisen. Fig. 4 und Fig. 5 zeigen hierfür Beispiele, wie sie sich bei der Datenübertragung vorgegebener Datenmengen über Kanäle mit vorgegebenen Übertragungsgeschwindigkeiten in einem Transitknoten ergeben. Vom Dispositionszeitpunkt t$_D$ an wird in einem ersten Zeitabschnitt zuerst nur eine Speichereinheit entsprechender Größe benötigt, und mit jedem weiteren Zeitabschnitt kommt eine weitere Speichereinheit hinzu, bis alle Daten empfangen sind -Dauer T$_E$. Anschließend werden die zwischengespeicherten Daten für die Dauer T$_S$ umgesetzt und weitergeleitet. Aus Sicherungsgründen und für Zwecke der Wiederholung bleibt der Speicherbedarf für diese letzte Phase konstant.

Das Benutzungsprofil BP von Fig. 5 unterscheidet sich von dem gemäß Fig. 4 allein dadurch, daß zwischen dem Empfangen der Daten und deren Weiterleitung noch eine Verarbeitung an Ort und Stelle für die Dauer T$_V$ erforderlich ist, was kurzzeitig zwei zusätzliche Speichereinheiten erfordert.

Fig. 6 zeigt ein aus den Benutzungsprofilen BP gemäß Fig. 4 und Fig. 5 zum Dispositionszeitpunkt t$_{D2/3}$ sich ergebendes und durch eine ausgezogene Linie gekennzeichnetes Gesamtbenutzungsprofil GBP, das aus drei nacheinander eingetroffenen Anfragen a, b und c resultiert, wobei jeder Buchstabe den Bedarf einer Speichereinheit als Poolelement je Zeitelement DZE kennzeichnet. Der Grenzwert GW wird hierbei für drei Zeitelemente gerade erreicht, und die Anfrage c konnte bereits im ersten nach dem Dispositionszeitpunkt t$_{D2/3}$ liegenden Zeitelement angenommen werden.

Würde man dagegen nach herkömmlicher Praxis die insgesamt benötigten Speichereinheiten zum Zeitpunkt der Anfrage jeweils bereits belegen und fest zuordnen, dann hätte – wie die rechte Säule zeigt – die Anfrage c z.B. erst nach vollständiger Bearbeitung des der Anfrage a zugehörigen Auftrages, also sehr viel später angenommen werden können, da ohne zwischenzeitliche Freigabe bis zu diesem Zeitpunkt der Grenzwert GW überschritten worden wäre. Die vorausschauende Disposition anhand der Benutzungsprofile erspart also in einfacher Weise Poolelemente oder sonstige Steuermechanismen, wie die wiederholte Vergabe von Sendekrediten gegebenenfalls mit veränderlichem Umfang.

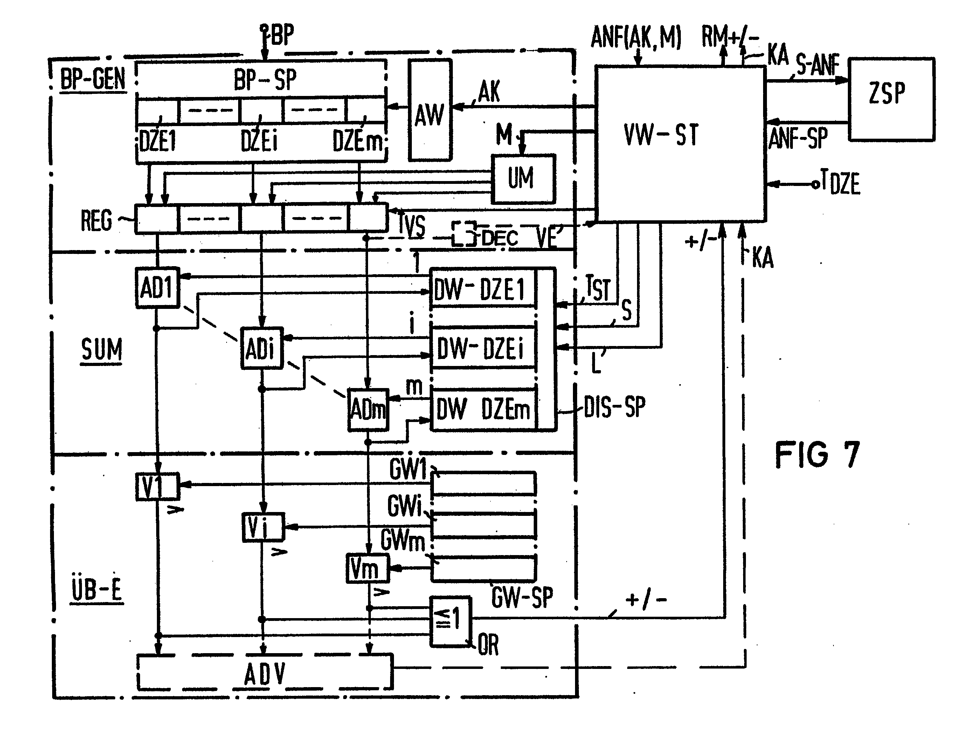

Fig. 7 zeigt das Blockschaltbild einer Anordnung zur Durchführung der Disposition, die im wesentlichen aus vier Funktionseinrichtungen besteht, nämlich aus einer Verwaltungssteuerung VW-ST zur Entgegennahme der Anfragen ANF, zur Abgabe der Rückmeldungen RM+/– und zur Steuerung des jeweiligen Dispositionsvorganges, aus einem Benutzungsprofilgenerator BP-GEN zur Bereitstellung des jeweiligen Benutzungsprofils BP, aus einer Einrichtung SUM mit einem Dispositionsspeicher DIS-SP zur Bildung des jeweiligen resultierenden Gesamtbenutzungsprofils und aus einer Überwachungseinrichtung ÜB-E zur Überprüfung des resultierenden Gesamtbenutzungsprofiles auf Einhaltung des bzw. der Grenzwerte GW... Mit der Verwaltungssteuerung VW-ST kann zur vorübergehenden Zwischenspeicherung von nicht sofort mit einer positiven Rückmeldung beantwortbaren Anfragen ANF ein Speicher ZSP gekoppelt sein.

Kernstück dieser Anordnung ist der Dispositionsspeicher DIS-SP. Dieser besteht zweckmäßig aus einem Schieberegister mit einer einem Vielfachen m von Zeiteinheiten ΔT entsprechenden Anzahl von Registerstufen, die jeweils einem Dispositionszeitelement, z.B. DZE1, zugeordnet sind und den für dieses Dispositionszeitelement zutreffenden Wert, z.B. DW-DZE1, an bereits disponierten Poolelementen gespeichert enthalten. Diese Werte ergeben nacheinander das für den Dispositionszeitraum $T = m \cdot \Delta T$ geltende Gesamtbenutzungsprofil GBP. Der Schieberegisterspeicher DIS-SP wird periodisch mit dem Takt $T_{ST}$ angesteuert, so daß die Registerstufeninhalte DW-DZE... um eine Registerstufe weitergeleitet werden, wobei jeweils der in der ersten Registerstufe enthaltene Wert DW-DZE1 entfällt und statt dessen in die letzte Stufe als Wert DW-DZEm der Wert 0 oder ein anderer zweckmäßiger Grundwert übernommen wird. Anstelle eines Schieberegisters könnte natürlich auch ein entsprechend zeigergesteuerter Speicher verwendet werden.

Bei jedem Dispositionsvorgang, der mit einem Leseimpuls L der Verwaltungssteuerung VW-ST einhergeht, werden die einzelnen Werte DW-DZE... am Ausgang der einzelnen Registerstufen 1 bis m zur Prüfung bereitgestellt. Für die Prüfung sind entsprechend m Addierer AD1 bis ADm vorgesehen, die zu den bereitgestellten Werten DW-DZE1 bis DW-DZEm die entsprechenden Werte des mit der Anfrage gekoppelten Benutzungsprofils BP addieren und an ihren Ausgängen die Werte für das daraus resultierende neue Gesamtbenutzungsprofil bereitstellen.

Diese Werte werden in der Überwachungseinrichtung ÜB-E einzeln mit dem vorgegebenen Grenzwert GW verglichen. Dieser Grenzwert GW kann einheitlich für alle Werte gelten oder aber auch individuell festgelegt und in einem Speicher GW-SP bereitgehalten werden. Entsprechend weist die Überwachungseinrichtung ÜB-E Vergleicher V1 bis Vm auf. Für diese Vergleicher können einfache Verknüpfungsnetzwerke verwendet werden, die nur ein Ausgangssignal > liefern, wenn der vorgegebene Grenzwert, z.B. GWi, überschritten wird. Diese Ausgangssignale > werden über ein ODER-Glied OR zusammengefaßt, dessen Ausgangssignal +/– dann der Verwaltungssteuerung VW-ST anzeigt, ob die Dispositionsprüfung positiv oder negativ verlaufen ist. Im Falle einer normal verlaufenden positiven Prüfung werden dann die Werte an den Ausgängen der Addierer AD1 bis ADM als neues Gesamtbenutzungsprofil mit einem Schreibimpuls S in den Speicher DIS-SP übernommen.

Anstelle einer parallelen Verarbeitung der den einzelnen Dispositionszeitelementen DZE1 bis DZEm entsprechenden Werte kann auch eine serielle Verarbeitung mit nur einem Addierer und einem Vergleicher vorgesehen werden, denen die Werte nacheinander über Auswahlschalter zugeführt werden. Anstelle des ODER-Gliedes OR wäre dann auch ein die aufeinanderfolgenden Vergleichersignale > integrierendes Bauelement, z.B. ein Zähler, erforderlich.

Die jeweils benötigten Benutzungsprofile BP liefert der Generator BP-GEN über ein Register REG mit m Registerstufen entsprechend der Anzahl der vorgesehenen Dispositionszeitelemente DZE1 bis DZEm. Benutzungsprofile mit variablem Belegungsumfang sind im Speicher BP-SP gespeichert und können anhand des mit der Anfrage ANF mitgelieferten Auftragskennzeichens AK ausgewählt und dem Register REG übergeben werden. Benutzungsprofile mit konstantem Belegungsumfang werden dagegen von einem einfachen Umsetzer UM anhand der notwendigen Angaben M der Anfrage ANF ermittelt.

Die Erstellung der Benutzungsprofile für den Speicher BP-SP erfolgt zweckmäßig durch Testanfragen für alle oder die am häufigsten vorkommenden Aufträge, indem jeweils ein einziger solcher Auftrag vom sonst leerlaufenden System ausgeführt wird und die Anzahl der je Dispositionszeitelement DZE tatsächlich belegten Poolelemente ermittelt wird. Diese Werte werden dann als Benutzungsprofil BP in den Speicher BP-SP beim entsprechenden Auftragskennzeichen AK abgelegt.

Für die anderen Benutzungsprofile mit konstantem Belegungsumfang können im Umsetzer UM entsprechende Tabellen angelegt sein, deren Einträge durch die Angaben M identifizierbar sind.

Das Register REG im Generator BP-GEN ist zweckmäßig ebenfalls als Schieberegister ausgebildet, das mit dem Takt $T_{VS}$ der Verwaltungssteuerung VW-ST getaktet wird. Auf diese Weise kann das gespeicherte Benutzungsprofil BP schrittweise nach rechts verschoben werden, bis der das rechte Ende des Benutzungsprofils bildende Wert, z.B. für das Zeitelement DZEi, die letzte Registerstufe erreicht hat, was mit einem einfachen Nulldecoder oder einem Vergleicher mit voreingestelltem Vergleichswert "0" überwacht werden kann, der der Verwaltungssteuerung VW-ST das Ende der möglichen Verschiebung anzeigt. Eine solche Verschiebung entspricht einem schrittweisen Entlanggleiten des Benutzungsprofils BP am vorliegenden, im Speicher DIS-SP gespeicherten Gesamtbenutzungsprofil GBP, so daß auch vorausschauend über den gesamten Dispositionszeitraum disponiert werden kann, wenn die normale erste Prüfung negativ verlaufen ist.

Die Tatsache, daß eine Anforderung ANF nicht sofort mit einer positiven Rückmeldung RM+ beantwortet werden kann, aber eine Annahme innerhalb des Dispositionszeitraumes möglich ist, kann beispielsweise als Voraussetzung dafür dienen, daß die Anforderung nicht mit einer negativen Rückmeldung RM– abgewiesen, sondern ohne Rückmeldung im Speicher ZSP zwischengespeichert wird, um das System zu entlasten.

Auch können die Ausgangssignale > der Vergleicher V1 bis Vm in der Überwachungseinrichtung ÜB-E in einfacher Weise dazu verwendet werden, die Gesamtauslastung aller verfügbaren Poolelemente zu überprüfen und davon abhängig vorübergehend die Annahme von weiteren Anforderungen ANF zu sperren, um auch auf diese Weise das System zu entlasten. So können z.B. die ersten x oder alle Ausgänge der Vergleicher V1 bis Vm durch ein gestrichelt angedeutetes Summierglied ADV überwacht werden, das bei Überschreiten eines vorgegebenen Wertes das Sperrsignal KA auslöst, welches dann über die Verwaltungssteuerung VW-ST weitergeleitet wird.

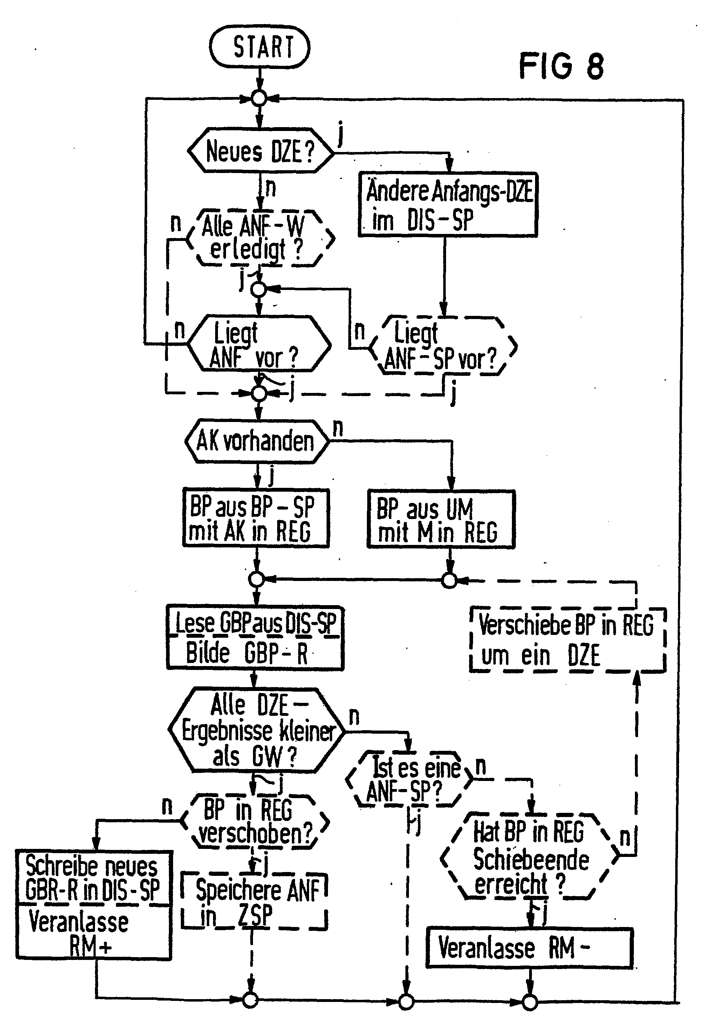

Der Aufbau der Verwaltungssteuerung VW-ST ergibt sich aus der Arbeitsweise gemäß dem Flußdiagramm von Fig. 8, bei dem Zusatzvarianten gestrichelt sind.

Sobald die Verwaltungssteuerung VW-ST mit START betriebsbereit ist, wird zunächst überprüft, ob ein neues Dispositionszeitelement DZE begonnen hat. Ist dieses der Fall, muß zunächst das Gesamtbenutzungsprofil im Dispositionsspeicher DIS-SP dem Zeitablauf angepaßt werden, was in einfacher Weise – wie bereits erläutert – bei einem Schieberegister als Dispositionsspeicher durch den Schiebetakt $T_{ST}$ erfolgen kann.

Danach wird in der Grundvariante ohne Zwischenspeicherung von Anforderungen überprüft, ob eine neue Anfrage ANF vorliegt.

Werden dagegen Anforderungen zwischengespeichert, so sind zunächst die gestrichelt angedeuteten Prüfungen auszuführen, um festzustellen, ob zwischengespeicherte Anforderungen ANF-SP vorliegen, die vorher zu prüfen sind.

Sind keine Anforderungen zwischengespeichert und liegen auch keine neuen direkten Anforderungen ANF vor, dann beginnt der bisherige Prüfzyklus von vorne.

Sind dagegen Anfragen zu prüfen, wird zunächst festgestellt, ob ein Auftragskennzeichen AK vorliegt und demzufolge der Benutzungsprofilspeicher BP-SP anzusteuern ist oder ob das Benutzungsprofil BP vom Umsetzer UM abzurufen ist. Das jeweilige Benutzungsprofil BP wird dann in das Register REG im Generator BP-GEN übernommen. Weiterhin wird das Gesamtbenutzungsprofil aus dem Dispositionsspeicher DIS-SP gelesen und das neue resultierende Gesamtbenutzungsprofil GBP-R gebildet. Anschließend wird geprüft, ob alle Ergebnisse der einzelnen Dispositionszeitelemente DZE... kleiner als der vorgegebene Grenzwert GW sind. Ist dies der Fall, wird im Normalfall das neue Gesamtbenutzungsspeicher GBP-R in den Dispositionsspeicher DIS-SP eingeschrieben und die positive Rückmeldung RM+ veranlaßt, während bei einem negativen Prüfungsergebnis eine negative Rückmeldung RMerfolgt. Danach beginnt der gesamte Prüfzyklus bei START von vorn.

Die übrigen gestrichelt angedeuteten Prüfungen gelten für den Fall, daß anhand einer vorausschauenden Disposition geprüft wird, ob eine Annahme einer sonst abzuweisenden Anfrage im Dispositionszeitraum möglich ist und daher zwischengespeichert werden kann.

Wird bei einer normalen, nicht zwischengespeicherten Anfrage ANF für eines der Dispositionszeitelemente DZE... der Grenzwert GW überschritten, dann erfolgt eine Verschiebung des Benutzungsprofils im Register REG um ein Dispositionszeitelement, und die Dispositionsprüfung wird erneut ausgeführt, jedoch nur so lange, bis das Ende der Verschiebung erreicht ist, und unter der Voraussetzung, daß es sich nicht um eine bereits zwischengespeicherte Anfrage ANF-SP handelt. Daher wird bei der Überprüfung einer gespeicherten Anfrage ANF-SP der Prüfzyklus unmittelbar abgebrochen und bei Erreichen der Schiebeendstellung endgültig die negative Rückmeldung RM– veranlaßt. Anschließend wird wieder bei START begonnen.

Ergibt sich im Rahmen der vorausschauenden Disposition mit Verschiebung des Benutzungsprofils BP gegenüber dem Gesamtbenutzungsprofil GBP, daß eine Anfrage im Dispositionszeitraum unterbringbar ist, dann wird anhand der erfolgten Verschiebung vorerst noch keine Änderung des Gesamtbenutzungsprofils mit positiver Rückmeldung RM+ veranlaßt, sondern die Anfrage zunächst nur im Speicher ZSP zwischengespeichert und der Dispositionsvorgang mit Rücksprung auf den Anfang bei START abgeschlossen.

Bei der bisher erläuterten Arbeitsweise anhand des Flußdiagrammes von Fig 8 wurde unterstellt, daß die Verwaltungssteuerung VW-ST bei bestehender Betriebsbereitschaft ständig tätig ist und überwacht, ob ein neues Dispositionszeitelement DZE begonnen hat und ob eine neue Anfrage ANF vorliegt. Die Verwaltungssteuerung VW-ST kann aber auch in einfacher Weise so arbeiten, daß sie nur tätig wird, wenn ein neues Dispositionszeitelement DZE begonnen hat oder wenn eine neue Anfrage ANF eingetroffen ist, wobei anstelle der Rückkehr zum Anfang bei START die Tätigkeit jeweils beendet wird.

Mit der bisher anhand von Fig. 7 und Fig. 8 erläuterten Anordnung lassen sich also in einfacher Weise Dispositionen für den voraussichtlichen Belegungsumfang der Poolelemente in einem vorgegebenen Dispositionszeitraum durchführen, und es kann davon abhängig die Annahme oder Abweisung einer Anfrage ANF gesteuert werden. Dabei sind mehrere Steuerungsvarianten möglich:

a) Bei negativ ausgefallener Dispositionsprüfung erfolgt die sofortige Abweisung der Anfrage mit einer negativen Rückmeldung RM–.

b) An die Stelle der negativen Rückmeldung RMkann bei positiver vorausschauender Dispositionsprüfung mit Verschiebung des Benutzungsprofils am Gesamtbenutzungsprofil entlang auch eine positive Rückmeldung RM+ mit einer der Verschiebung entsprechenden Zeitangabe als Hinweis dafür erfolgen, daß der Zugriff nicht sofort, sondern entsprechend verzögert erfolgen darf, so daß die Anfrage nicht wiederholt zu werden braucht, der Benutzer aber über das Ausmaß des Zeitverzuges informiert wird. Diese Variante ist zwar anhand von Fig. 7 und Fig. 8 bisher nicht erläutert worden. Die hieraus notwendige Ergänzung liegt aber für den Fachmann auf der Hand. Zum Beispiel braucht lediglich die Anzahl der Verschiebetakte $T_{VS}$ für das Register REG im Generator BP-GEN gezählt und mit der zugrundegelegten Zeiteinheit $\Delta T$ multipliziert zu werden, um die benötigte Zeitangabe für die Rückmeldung zu erhalten.

c) Der Benutzer erhält auf eine Anfrage ANF keine negative Rückmeldung RM–, sondern muß warten. Die Anfragen werden dann zwischengespeichert und periodisch überprüft.

d) Als Mischung aus diesen drei Varianten ergibt sich ausgehend von der letzten Varianten als weitere Variante: Die Zwischenspeicherung erfolgt nur, wenn eine durchgeführte vorausschauende Dispositionsprüfung positiv verlaufen ist, die Anfrage also im vorgegebenen Dispositionszeitraum untergebracht werden kann. Andernfalls ergeht eine negative Rückmeldung RM–. Die Wartezeit des anfragenden Benutzers ist damit vorausschaubar gegrenzt.

Zwischengespeicherte Anfragen ANF-SP werden zweckmäßig mit erhöhter Priorität gegenüber erstmalig eintreffenden Anfragen ANF bearbeitet, z.B. in der Weise – wie anhand von Fig. 7 und 8 bereits erläutert –, daß zu Beginn eines jeden neuen Dispositionszeitelementes DZE zunächst die zwischengespeicherten Anfragen ANF-SP überprüft werden. Aber auch bezüglich der zwischengespeicherten Anfragen können unterschiedliche Prioritäten vorgesehen werden, damit die am längsten gespeicherten Anfragen immer als erste überprüft werden. So kann beispielsweise mit jeder negativ verlaufenden wiederholten Überprüfung einer zwischengespeicherten Anfrage die Priorität erhöht werden. Eine andere Möglichkeit besteht darin, abhängig von einer vorgegebenen Anzahl von Prioritätsstufen im Verhältnis zur Gesamtzahl der Dispositionszeitelemente DZE eine Umstufung in eine höhere Prioritätsstufe erst nach einer vorgegebenen Anzahl von aufeinanderfolgend negativ verlaufenen Dispositionsprüfungen vorzunehmen. Dies kann durch einen, jeder im Speicher ZSP zwischengespeicherten Anfrage zugehörigen Zählabschnitt gesteuert werden.

Schließlich kann – wie bereits anhand von Fig. 7 erläutert worden ist – die Annahme von Anfragen ANF vorübergehend gesperrt und damit das System von unnötiger interner Last durch Bearbeitung nicht unterbringbarer Anfragen befreit werden. Auf diese Weise wirkt die Dispositionssteuerung zugleich als Zugangskontrollsteuerung, was sich besonders bei Anwendung in Kommunikationsnetzwerken vorteilhaft auswirkt.

Fig. 9 zeigt in prinzipieller Darstellung eine über Transitknoten TK1 und TKn mit einer Verarbeitungssenke VA-S verbundene Verarbeitungsquelle VA-Q. Als Verarbeitungsquellen und Senken können dabei unmittelbar Benutzerstationen oder aber auch Prozesse wirken, die über die Transitknoten TK... in beliebiger bekannter Weise miteinander in Verbindung treten und Nutz- und Steuerdaten austauschen können. Die gezeigten Transitknoten TK1 und TKn selbst können in an sich bekannter Weise mit weiteren nicht gezeigten Transitknoten in Verbindung sehen, oder aber es können an diese weitere Verarbeitungseinheiten angeschlossen sein, die je nach Übertragungsrichtung als Quelle oder Senke tätig werden. Zusätzlich können die in den einzelnen Transitknoten TK... ablaufenden Prozesse als Quelle oder Senke in Erscheinung treten.

Gemäß der Erfindung arbeiten alle Verarbeitungseinheiten einschließlich der Transitknoten TK... mit Dispositionssteuerungen für die vorhandenen gleichartigen Poolelemente in Form von Übertragungskanälen oder Verbindungsleitungen, von Speichereinheiten und von Verarbeitungseinheiten eines gemeinsamen Prozessors, wobei die wesentlichste Bedeutung der Verwaltung der Speichereinheiten zukommt, da diese Hauptträger der zu übertragenden Datenmassen sind. Anfragen D-ANF einer Verarbeitungsquelle VA-Q durchlaufen dabei in bekannter Weise alle Transitknoten TK... auf dem Weg zur jeweiligen Verarbeitungssenke VA-S, und Zugriffe, z.B. in Form der eigentlichen Datenübertragung, dürfen von anfragenden Verarbeitungsquellen VA-Q nur ausgeführt werden, wenn diese durch die von der Verarbeitungssenke VA-S ausgehende positive Rückmeldung D-RM+ nach Annahme durch alle zwischengeschalteten Transitknoten TK... genehmigt sind.

Ausgehend von diesem bekannten Grundprinzip zeigt Fig. 10 ein Ablaufdiagramm für die Weiterleitung der Anfragen D-ANF und der Rückmeldungen D-RM+ gemäß der Erfindung. Jede in einem Transitknoten TK... oder der Verarbeitungssenke VA-S ankommende Anfrage D-ANF wird zunächst einer Dispositionsprüfung DP unterworfen. Erst wenn diese positiv verlaufen ist, wird die Anfrage weitergeleitet. Hierbei handelt es sich in den Transitknoten TK... jedoch nur um eine vorläufige Dispositionsprüfung, bei der das jeweils vorliegende Gesamtbenutzungsprofil noch nicht verändert wird.

Die erstmalige tatsächliche Disposition einer Anfrage D-ANF erfolgt vielmehr erst in der angesteuerten Verarbeitungssenke VA-S, denn diese entscheidet letztendlich darüber, ob die gewünschten Poolelemente am Zielort zur Verfügung stehen und die Anfrage bearbeitet werden kann. Erst die dadurch ausgelöste positive Rückmeldung D-RM+ führt auch in den vorgeschalteten Transitknoten, z.B. TKn und TK1, zur Berücksichtigung der Anfrage im Gesamtbenutzungsprofil, was bei Fig. 10 im rücklaufenden Meldepfad für die positiven Rückmeldungen D-RM+ jeweils durch die Pfeile D angedeutet ist.

Wie allgemein geläufig und auch aus dem Ablaufdiagramm von Fig. 10 ersichtlich, verstreicht zwischen der Auslösung einer Anfrage D-ANF und dem Eintreffen der Rückmeldung D-RM+ an der Verarbeitungsquelle VA-Q eine Wartezeit, die sich aus den Übertragungszeiten der Steuerinformation und deren Verarbeitung in den einzelnen Transitknoten TK... und der angesteuerten Verarbeitungssenke VA-S ergibt. Daraus ergibt sich zwangsläufig ein entsprechender Zeitverzug zwischen der an den einzelnen Übertragungsstellen ausgeführten Disposition und der tatsächlichen Belegung der disponierten Poolelemente für die Ausführung des mit einer Anfrage verbundenen Auftrags. Diese Zeitverschiebungen und auch eine sich durch zusätzliche Verarbeitung in den Transitknoten ergebende Veränderung des Benutzungsprofils werden bei den Dispositionen in den einzelnen Übertragungsstellen zweckmäßig berücksichtigt.

Einflüsse auf das jeweilige ursprüngliche Benutzungsprofil können entweder durch Tests oder aber indirekt ermittelt werden. Letzteres ist ohne weiteres möglich, da die Steuerinformationen in der Regel mit Angaben über den Ursprungs- und den Zielort versehen sind, aus denen in Verbindung mit Wegeinformationen über den Verbindungsweg in den einzelnen Übertragungsstellen anhand der sonstigen Daten des Kommunikationsnetzes, wie Übertragungsgeschwindigkeit der angeschlossenen Kanäle, Art der Übertragungsprozedur auf den einzelnen Kanälen usw., die sich auf das jeweils zu berücksichtigende Benutzungsprofil auswirkenden Änderungen errechnet werden können.

Nicht sofort weiterleitbare Anfragen D-ANF werden zweckmäßig zwischengespeichert, wenigstens in den der ersten Übertragungsstelle folgenden Übertragungsstellen, damit das Netzwerk nicht unnötig mit negativen Rückmeldungen belastet wird. Auf das jeweilige Benutzungs- und Gesamtbenutzungsprofil ist eine solche Verzögerung ohne Auswirkung, da die tatsächlichen Dispositionen jeweils erst mit der rücklaufenden positiven Rückmeldung D-RM+ erfolgt. Auch hierbei wirkt sich eine Prioritätserhöhung verzögerter Anfragen positiv aus, insbesondere, wenn die bis zur Verarbeitungssenke VA-S erreichte Priorität auch auf die Rückmeldung D-RNM+ übertragen wird.

Für den Fall, daß wegen des Zeitverzugs zwischen der vorläufigen Dispositionsprüfung und der entscheidenden Dispositionsprüfung bei Eintreffen der Rückmeldung D-RM+ in einem der Transitknoten TK... eine Dispositionsprüfung negativ verlaufen sollte und daher die Rückmeldung D-RM+ nicht unmittelbar weitergeleitet werden kann, wird diese in eine wiederholte Anfrage D-ANF-W umgewandelt, die wie eine normale Anfrage wieder in Vorwärtsrichtung bis zur Zielgruppe geleitet wird. Da in einem solchen Fall wenigstens in der Zielgruppe, also der Verarbeitungssenke VA-S eine Veränderung des Gesamtbenutzungsprofils in Verbindung mit der durchgeführten Dispositionsprüfung bereits erfolgt ist, muß dafür Sorge getragen werden, daß das geänderte Gesamtbenutzungsprofil wieder bereinigt wird. Dies wird zweckmäßig dadurch sichergestellt, daß bei der Disposition in der Verarbeitungssenke VA-S mit jeder Rückmeldung D-RM+ eine Zeitangabe über den Dispositionszeitpunkt mitgeliefert wird, die der wiederholten Anfrage D-ANF-W zugesetzt wird. Aufgrund dieser Zeitangabe kann die Verarbeitungssenke VA-S das noch nicht verbrauchte Restbenutzungsprofil ermitteln, z.B. durch Verschieben des Benutzungsprofils BP im Register REG des Generators BP-GEN von Fig. 7 nach links, um eine der Zeitangabe über den Dispositionszeitpunkt entsprechende Anzahl von Dispositionszeitelementen DZE. Durch Addition der verbleibenden Werte mit negativen Vorzeichen zu den Werten im Dispositionsspeicher DIS-SP erhält man dann in einfacher Weise das bereinigte Gesamtbenutzungsprofil, mit dem dann die erneute Dispositionsprüfung durchgeführt werden kann.

In gleicher Weise lassen sich auch die bereits geänderten Gesamtbenutzungsprofile in vorher durchlaufenen Transitknoten TK... unter Berücksichtigung der zusätzlichen Übertragungszeiten bereinigen, bevor eine erneute vorläufige Disposition durchgeführt wird.

Fig. 11 zeigt in Anlehnung an Fig. 10 das Ablaufdiagramm für einen solchen Fall, wobei zusätzlich für den Transitknoten TK1 eine Zwischenspeicherung der nicht unmittelbar weiterleitbaren Anfrage D-ANF durch den Hinweis ZSP angedeutet ist. Die aufgrund der die Verarbeitungssenke VA-S erstmalig erreichenden Anfrage D-ANF ausgelöste Rückmeldung D-RM+ kann im Transitknoten TK1 nicht weitergeleitet werden, da die endgültige Disposition negativ verlaufen ist, was mit DP− angedeutet ist. Die Rückmeldung wird daher in eine neue Anfrage D-ANF-W umgewandelt. Diese führt im nachfolgenden Transitknoten TKn und der Verarbeitungssenke VA-S zusätzlich zur Bereinigung des bereits geänderten Gesamtbenutzungsprofils, was mit D− angedeutet ist, und zu einer erneuten Rückmeldung D-RM+ nach erneuter Disposition.

Bei hoher Belastung des Netzwerksystems kann also eine Anfrage gegebenenfalls mehrmals zwischen der Verarbeitungssenke VA-S und den Transitknoten TK... hin- und herlaufen, bis die Disposition untergebracht werden kann. Die hieraus resultierende Belastung des Systems wird aber weitgehend durch die Nichtbenutzung der bereits disponierten Poolelemente für die eigentliche Auftragsabwicklung abgedeckt. Da dadurch Poolelemente der Dispositon für andere Anfragen entzogen sind, bremst sich das System auf diese Weise ohne weitere Eingriffe selbst, und zwar auf dem gesamten Wege zwischen den jeweiligen Endbenutzern.

Die umfassende Steuerwirkung des der Erfindung zugrundeliegenden Lösungsprinzips wird besonders deutlich bei nach Funktions- und Protokollschichten strukturierten Kommunikationsnetzwerken, bei dem die Maßnahmen zur Steuerung des Datenflusses auf verschiedene Ebenen eingreifen – man sehe z.B. die genannte IEEE Transactions, insbesondere Fig. 8 auf Seite 557; OUTPUT, 9403 Goldach, Nr. 6/1980, Seiten 35 bis 40, insbesondere Bild 3 auf Seite 37 und Bild 4 auf Seite 38; IBM Systems Journal, Vol 22, NOS 1/2, 1983, Seiten 30 bis 45, insbesondere Seite 37 ff, Abschn. Teletex protocol; Bocker: «Datenübertragung», Bd.I, 2.Aufl., Springer-Verlag 1983, Seiten 245 bis 248.

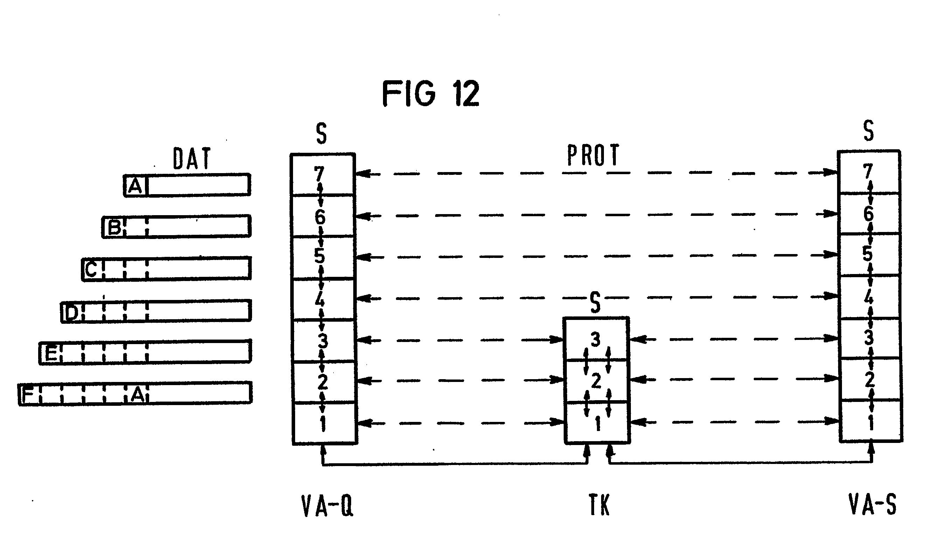

Fig. 12 zeigt ein dem Referenzmodell der ISO entsprechende Struktur mit sieben Schichten S7 bis S1 für die Verarbeitungsquelle VA-Q und die Verarbeitungssenke VA-S, während im Transitknoten TK lediglich die Schichten S1 bis S3 durchlaufen werden.

Die Schichten S1 bis S3 steuern dabei die netzwerkabhängigen Funktionen, die durch die Schicht S4 als Transportschicht mit den netzwerkunabhängigen, anwendungsbezogenen Funktionsschichten S5 bis S7 verbunden sind. Die jeweils vom Benutzer der Anwendungsschicht S7 ausgehenden Anfragen mit den Nutzdaten DAT und den Angaben A zum Anwenderprozeß werden von Schicht zu Schicht mit zusätzlichen Steuerinformationen B bis F angereichert, die als Parameter die Funktionen der jeweiligen Schicht steuern. Ebenso werden auf der Empfangsseite die schichtbezogenen Steuerinformationen F bis B in umgekehrter Richtung nach und nach wieder unterdrückt.

Im einfachsten Fall kann örtlich jede Schicht als selbständige Verarbeitungseinheit realisiert werden, wobei eine von der Verarbeitungseinheit für die Schicht S7 ausgehende Anfrage für die Ausführung eines Auftrags nacheinander an die Verarbeitungseinheiten der tieferen Schichten weitergeleitet, auf der untersten Schicht S1 zum Transitknoten TK und/oder zur Senke VA-S übertragen und dort aufsteigend wieder von Schicht zu Schicht den einzelnen Verarbeitungseinheiten weitergereicht wird, bis die Verarbeitungseinheit der obersten Schicht S7 erreicht ist.

Aus Aufwandsgründen ist es aber wenig sinnvoll, schichtindividuelle Verarbeitungseinheiten vorzusehen. Man faßt vielmehr die Verarbeitungseinheiten mehrerer oder gar aller Schichten zu einer Verarbeitungseinheit und ebenso die entsprechenden gleichartigen Poolelemente, insbesondere die Speichereinheiten, zu einer gemeinsamen Gruppe je Verarbeitungseinheit zusammen. Das gilt insbesondere für die Schichten S1 bis S3 bzw. S1 bis S4.

Die bisher bekannten Mechanismen zur Datenflußsteuerung reichen lediglich bis zur Transportschicht S4 im Rahmen einer "end-to-end"-Steuerung — man sehe genannte IEEE Transactions, Abschn. VI auf Seite 571 — und erfassen daher nicht die anwendungsbezogenen Schichten S5 bis S7. Infolgedessen werden die von der Anwendungsschicht S7 ausgehenden Angaben über den Umfang des Auftrags bisher nicht weiter berücksichtigt. Man beschränkt vielmehr den eingeräumten Sendekredit für die auszusendende Datenmenge und wiederholt diesen Kredit ständig, bis die gesamte Datenmenge im Rahmen eines auszuführenden Auftrags übertragen ist. An der Schnittstelle zwischen der Schicht S4 und S5 der Verarbeitungssenke braucht daher nur eine begrenzte Anzahl von Speichereinheiten als Poolelemente bei einer Auftragsabwicklung zur Verfügung zu stehen. Durch mögliche Verzögerungen der wiederholten Rückmeldungen für die Sendekredite kann dieser Steuermechanismus aber zu unnötigen Verzögerungen bei der Auftragsabwicklung führen.

Bei Anwendung des der Erfindung zugrundeliegenden Lösungsprinzips werden dagegen die von der Benutzerschicht S7 ausgehenden Angaben über den Umfang des Auftrags in Form des Benutzungsprofils in jeder eigenständigen Verarbeitungseinheit mit eigener Gruppe von Poolelementen berücksichtigt. Eine durch eine positive Rückmeldung beantwortete Anfrage unterliegt damit in der Regel keiner den Sendekrediten entsprechenden Sendebeschränkung. Die Flußsteuerung erfaßt von der obersten Schicht S7 ausgehend alle Schichten und wirkt umfassender als die bisherigen Flußsteuerungsmechanismen. Aufträge können in der Regel schneller ausgeführt und damit das gesamte System optimaler genutzt werden.

Weitere Vorzüge des der Erfindung zugrundeliegenden Lösungsprinzips, insbesondere bei der Anwendung in Kommunikationsnetzwerken, ergeben sich in Verbindung mit einer Überwachung der je Dispositionszeitelement DZE tatsächlich belegten Poolelemente. Folgende Überlegung ist dabei maßgebend:

Ist während des jeweils ersten Dispositionszeitelementes ein Teil — DW-DZE1 im Dispositionsspeicher DIS-SP von Fig. 7 — der Poolelemente im Gesamtbenutzungsprofil als disponiert berücksichtigt, dann müßte auch die Anzahl der während dieser Zeiteinheit tatsächlich belegten Poolelemente gleich groß sein, wenn Disposition und Belegung konform verlaufen. Bei ausgedehnten Netzwerken können sich hierbei aber Verschiebungen in der einen oder anderen Richtung ergeben, d.h., die Anzahl der disponierten Poolelemente kann mal größer oder kleiner als die Anzahl der tatsächlich belegten Poolelemente sein.

Im einen Falle eilt die Disposition der Belegung voraus, weil sich Verzögerungen bei der Auftragsabwicklung ergeben haben. Damit besteht die Gefahr, daß in den nachfolgenden Dispositionszeitelementen gegebenenfalls mehr Poolelemente belegt werden als disponiert sind. Im anderen Falle erfolgt die Belegung schneller als bei der Disposition angenommen, so daß in den nachfolgenden Dispositionszeitelementen mehr Poolelemente disponiert sind als tatsächlich belegt werden.

Bildet man daher die Differenz aus der Anzahl DW-DZE1 der für das erste Zeitelement disponierten Poolelemente und der Anzahl der tatsächlich während dieser Zeiteinheit belegten Poolelemente, dann erhält man ein Maß für das Auseinanderklaffen von Disposition und Belegung, das zur Korrektur herangezogen werden kann. Beispielsweise addiert man die am Ende eines Zeitelementes erhaltene Differenz zu dem Wert DW-DZE2 der für das zweite Zeitelement disponierten Poolelemente und übernimmt diesen korrigierten Wert als neuen Wert DW-DZEW1 für das neue erste Zeitelement im Dispositionsspeicher DIS-SP.

Ist also die Differenz größer 0, dann erhöht sich die Anzahl der bisher disponierten Poolelemente. Ist umgekehrt die Differenz kleiner 0, dann erniedrigt sich die Anzahl. In gleicher Weise kann man die Korrektur auf die ersten n oder alle im Dispositionsspeicher DIS-SP gespeicherten Werte DW... ausdehnen.

Anstelle der Werte DW... im Dispositionsspeicher können aber auch die Grenzwerte GW im Speicher GW-SP geändert werden, wenn diese Speichermöglichkeit für individuelle Grenzwerte GW1 bis GWm vorgesehen ist. Die Änderung erfolgt dabei aber mit umgekehrtem Vorzeichen, da ja bei einer Erhöhung der Anzahl der disponierten Poolelemente der Anteil an disponierbaren Poolelementen entsprechend verringert wird und umgekehrt.

Eine derartige Korrektur der Grenzwerte GW ist insbesondere dann ohne weiteres möglich, wenn die Anzahl der disponierbaren Poolelemente insgesamt geringer bemessen ist als die Anzahl der insgesamt verfügbaren Poolelemente. Dies gilt insbesondere für Speichereinheiten als Poolelemente, die insgesamt nicht nur für die zu übertragenden Nutzdaten, sondern auch für Steuerdaten benötigt werden und auch im Überlastfall für die Aufrechterhaltung von Systemgrundfunktionen verfügbar sein müssen.

Insgesamt steht für die Steuerung eine Reihe von Einflußgrößen zur Verfügung, die bei systembedingter richtiger Bemessung eine optimale Nutzung des Systems mit seinen Poolelementen ermöglichen, was durch entsprechende Messungen überprüft werden kann. Auch kann abweichend von dem an Hand von Fig. 7 erläuterten Ausführungsbeispiel ohne weiteres ein solches mit speicherprogrammierter Steuerung verwendet werden.

**Patentansprüche**

1. Verfahren zur Steuerung des Zugriffs zu einer Gruppe von gemeinsam nutzbaren Einrichtungen als Poolelemente (z.B. Verbindungsleitungen, Speichereinheiten, Arbeitszeiteinheiten eines Prozessors) in einem Datenverarbeitungs- oder Kommunikationssystem, bei dem jeweils als Quelle arbeitende Einrichtungen (z.B. Benutzerstationen) ihren Zugriffswunsch bei einer die Poolelemente verwaltenden Verwaltungssteuerung durch eine Anfrage (ANF) melden, die Verwaltungssteuerung (VW-ST) bei Verfügbarkeit der benötigten Poolelemente diese für die anfragende Einrichtung reserviert und die Bereitstellung der anfragenden Einrichtung meldet und die anfragende Einrichtung erst nach dieser Rückmeldung (RM+) den gewünschten Zugriff ausführt, dadurch gekennzeichnet, daß mit jeder Anfrage (ANF) Angaben verbunden sind, aus denen ein zeitliches Benutzungsprofil (BP) mit konstantem oder variablem Belegungsumfang für die benötigten Poolelemente ableitbar ist, daß die Verwaltungssteuerung abhängig von diesem Benutzungsprofil (BP) der einzelnen Anfragen (ANF) für alle verwalteten Poolelemente durch Überlagerung der einzelnen Benutzungsprofile (BP) ein Gesamtbenutzungsprofil (GBP) erstellt, aus dem der voraussichtliche zeitliche Verlauf der Belegung aller verwalteten Poolelemente ableitbar ist, daß bei jeder Anfrage (ANF) das damit verbundene Benutzungsprofil (BP) dem bestehenden Gesamtbenutzungsprofil (GBP) überlagert und geprüft wird, ob die sich aus dem neuen Gesamtbenutzungsprofil (GBP-R) aller verwalteten Poolelemente ergebende Last bewältigt werden kann, und daß lediglich bei einem positiven Ergebnis dieser Prüfung die laufende Anfrage (ANF) durch eine positive Rückmeldung (RM+) beantwortet wird, wobei die benötigten Poolelemente zunächst durch Anpassung des Gesamtbenutzungsprofils (GBP) lediglich disponiert und erst nachfolgend entsprechend dem tatsächlichen Bedarf dem durch die Anfrage ausgelösten Auftrag zugeordnet und belegt werden.

2. Verfahren nach Anspruch 1, dadurch gekennzeichnet, daß nicht sofort mit einer positiven Rückmeldung (RM+) beantwortbare Anfragen (ANF) mit einer negativen Rückmeldung (RM–) abgewiesen werden und daß die Anfrage (ANF) von der anfragenden Einrichtung wiederholt werden muß, bis eine positive Rückmeldung (RM+) erhalten wird.

3. Verfahren nach Anspruch 2, dadurch gekennzeichnet, daß nicht sofort mit einer positiven Rückmeldung (RM+) beantwortbare Anfragen (ANF) einer vorausschauenden Dispositionsprüfung mit schrittweiser Verschiebung des Benutzungsprofils (BP) entlang dem Gesamtbenutzungsprofil (GBP) unterworfen werden und daß bei einer im bestehenden Dispositionszeitraum unterzubringenden Anfrage anstelle der negativen Rückmeldung (RM–) eine positive Rückmeldung (RM+) mit einer sich aus der zeitlichen Verschiebung des Benutzungsprofils (BP) gegenüber dem Gesamtbenutzungsprofil (GBP) ergebenden Zeitdauer als Zeitangabe (ZA) abgegeben wird, die der anfragenden Einrichtung anzeigt, daß der gewünschte Zugriff mit entsprechendem Zeitverzug ausgeführt werden kann.

4. Verfahren nach Anspruch 1, dadurch gekennzeichnet, daß nicht sofort mit einer positiven Rückmeldung (RM+) beantwortbare Anfragen (ANF) zwischengespeichert und in periodischen Abständen überprüft werden, bis eine positive Rückmeldung (RM+) möglich ist.

5. Verfahren nach Anspruch 4, dadurch gekennzeichnet, daß eine Zwischenspeicherung der Anfrage (ANF) nur erfolgt, wenn eine vorausschauende Dispositionsprüfung zu einem positiven Ergebnis geführt hat, während bei einem negativen Prüfungsergebnis die Anfrage mit einer negativen Rückmeldung (RM–) abgewiesen wird.

6. Verfahren nach Anspruch 4 oder 5, dadurch gekennzeichnet, daß die Bearbeitungspriorität der zwischengespeicherten Anforderungen (ANF-SP) abhängig von einer vorgegebenen Anzahl von negativen Überprüfungen fortlaufend erhöht wird.

7. Verfahren nach einem der Ansprüche 1 bis 6, dadurch gekennzeichnet, daß die Annahme von Anfragen (ANF) zur Dispositionsprüfung gesperrt wird, wenn das Gesamtbenutzungsprofil (GBP) für eine vorgegebene Zeit die Belegung aller disponierbaren Poolelemente erkennen läßt.

8. Verfahren nach einem der Ansprüche 1 bis 7 für mehrere in Reihe wirksame, getrennte Gruppen von Poolelementen, insbesondere für Gruppen von Poolelementen in verschiedenen Knoten (z.B. TK1) eines Kommunikationsnetzwerkes, bei dem die Anfragen (D-ANF) nacheinander von Gruppe zu Gruppe bis zur gewünschten Zielgruppe (VA-S) weitergeleitet werden und eine Rückmeldung (D-RM+) erst nach Annahme der Anfrage (D-ANF) von allen Gruppen auf dem Wege bis zur Zielgruppe (VA-S) von dieser aus in Gegenrichtung bis zur anfragenden Einrichtung (VA-Q) zurückgesandt wird, dadurch gekennzeichnet, daß anhand der mit einer Anfrage (D-ANF) verbundenen Angaben zur Ableitung des Benutzungsprofils (BP) nacheinander für jede Gruppe (z.B. TK1) von Poolelementen die Annahmemöglichkeit der Anfrage anhand des jeweils vorliegenden Gesamtbenutzungsprofils (GBP) überprüft wird und die Anfrage (D-ANF) nur bei einem positiven Prüfungsergebnis (DP+) zur nachfolgenden Gruppe (z.B. TKn) weitergeleitet wird, ohne daß die für die Anfrage (D-ANF) benötigten Poolelemente durch Änderung des jeweils vorliegenden Gesamtbenutzungsprofils (GBP) zunächst disponiert werden, und daß erst die von der Zielgruppe (VA-S) nach vorgenommener Disposition (DP+) ausgelöste positive Rückmeldung (D-RM+) nacheinander in den einzelnen Gruppen (z.B. TK1 bis TKn) die notwendige Anpassung der zugehörigen Gesamtbenutzungsprofile (GBP) auslöst, bis die Rückmeldung die anfragende Einrichtung (VA-Q) erreicht.

9. Verfahren nach Anspruch 8, dadurch gekennzeichnet, daß bei der Disposition in den einzelnen Gruppen (z.B. TKn) von Poolelementen die durch die Übertragung und Verarbeitung in den jeweils vorangegangenen Gruppen (z.B. TK1) bedingten Zeitverschiebungen bzw. Änderungen des ursprünglichen Benutzungsprofils (BP) einer laufenden Anfrage (D-ANF) berücksichtigt werden.

10. Verfahren nach Anspruch 8 oder 9, dadurch gekennzeichnet, daß wenigstens in den der ersten Gruppe (z.B.TK1) folgenden Gruppen (z.B.TKn, VA-S) von Poolelementen jede nicht sofort annehmbare Anfrage (D-ANF) vorübergehend zwischengespeichert und in periodischen Zeitabständen überprüft wird.

11. Verfahren nach Anspruch 10, dadurch gekennzeichnet, daß mit jeder negativ verlaufenden Prüfung (DP–) einer zwischengespeicherten Anfrage (D-ANF) die Bearbeitungspriorität dieser Anfrage erhöht wird und daß die dabei erzielte Bearbeitungspriorität für alle nachfolgenden Gruppen von Poolelementen wirksam wird.

12. Verfahren nach Anspruch 11, dadurch gekennzeichnet, daß die den Anfragen (D-ANF) letztlich zugeordnete Bearbeitungspriorität auf die Rückmeldung (D-RM+) der Zielgruppe (VA-S) übertragen wird.

13. Verfahren nach einem der Ansprüche 8 bis 12, dadurch gekennzeichnet, daß die von der Zielgruppe (VA-S) erzeugte Rückmeldung (D-RM+) mit einer Angabe über den Dispositionszeitpunkt versehen wird, daß bei einer aufgrund der Rückmeldung (D-RM+) in einer der Gruppen (z.B.TK1) nicht ausführbaren Disposition die Rückmeldung (D-RM+) in eine gesondert gekennzeichnete neue Anfrage (D-ANF-W) umgewandelt wird, der die Angabe über den Dispositionszeitpunkt der Zielgruppe (VA-S) zugesetzt wird, und daß in den von der wiederholten Anfrage (D-ANF-W) betroffenen Gruppen (z.B.TKn, VA-S) anhand der der Anfrage zugefügten Angabe über den Dispositionszeitpunkt und des zugehörigen Benutzungsprofiles das noch nicht verbrauchte Restbenutzungsprofil der Anfrage ermittelt und das gegebene Gesamtbenutzungsprofil entsprechend bereinigt wird, bevor die Anfrage weitergeleitet wird bzw. in der Zielgruppe (VA-S) eine erneute Disposition erfolgt und eine neue Rückmeldung (D-RM+) abgegeben wird.

14. Verfahren nach einem der Ansprüche 1 bis 13, dadurch gekennzeichnet, daß zur Disposition der Poolelemente einer Gruppe über eine vorgegebene Zeitdauer jeweils eine dieser Zeitdauer (T) entsprechende Anzahl (z.B.15) von jeweils einer vorgegebenen Zeiteinheit (ΔT) entsprechenden Dispositionszeitelementen (DZE) verwendet wird und jedem Dispositionszeitelement (DZE) jeweils die Anzahl (DW) der zu dieser Zeiteinheit voraussichtlich belegten Poolelemente zugeordnet wird, daß nach Ablauf einer jeden Zeiteinheit das zugehörige Dispositionszeitelement (DZE1) am Anfang der Zeitelementenfolge (z.B.DZE1 bis DZEm) durch ein neues (DZEm+1) am Ende der Folge ersetzt wird, daß das jeweils einer Anfrage (ANF) zugehörige Benutzungsprofil (BP) entsprechend den Dispositionszeitelementen (DZE) aufgeteilt wird und die sich dadurch je Dispositionszeitelement jeweils ergebende Anzahl von benötigten Poolelementen, beginnend mit einem vorgegebenen Dispositionszeitelement (z.B. DZE1) des vorhandenen Gesamtbenutzungsprofils (GBP), für alle Dispositionszeitelemente einzeln jeweils der zugehörigen Anzahl von bereits disponierten Poolelementen je Dispositionszeitelement hinzugefügt wird, daß die sich dabei für jedes Dispositionszeitelement ergebende Gesamtzahl von benötigten Poolelementen jeweils mit einem vorgegebenen Grenzwert (GW...) für die insgesamt verfügbaren Poolelemente verglichen wird und daß bei Überschreiten dieses Grenzwertes für nur eines der Dispositionszeitelemente (z.B.DZEi) des resultierenden Gesamtbenutzungsprofiles (GBP-R) der laufende Dispositionsvorgang abgebrochen wird.

15. Verfahren nach Anspruch 14, dadurch gekennzeichnet, daß aufgrund eines negativ verlaufenen Dispositionsvorganges zwischengespeicherte Anfragen (ANF-SP) während jeder Zeiteinheit (ΔT = DZE) nur einmal überprüft werden.

16. Verfahren nach Anspruch 14 oder 15, dadurch gekennzeichnet, daß die dem nach Ablauf einer jeden Zeiteinheit (ΔT) wegfallenden Dispositionszeitelement (z.B. DZE1) am Anfang der Zeitelementenfolge (DZE1 bis DZEm) zugeordneten disponierten Poolelemente im Gesamtbenutzungsprofil (GBP) gelöscht werden.

17. Verfahren nach Anspruch 14 oder 15, dadurch gekennzeichnet, daß jeweils am Ende einer Zeiteinheit aus der Relation zwischen der Anzahl der während dieser Zeiteinheit tatsächlich belegten Poolelemente und der Anzahl der für das zugehörige Dispositionszeitelement disponierten Poolelemente ein Korrekturwert abgeleitet wird und daß anhand dieses Korrekturwertes die dem nachfolgenden Dispositionszeitelement zugehörige Anzahl von noch disponierbaren Poolelementen korrigiert wird.

18. Verfahren nach einem der Ansprüche 1 bis 17, dadurch gekennzeichnet, daß wenigstens die häufig auftretenden Benutzungsprofile mit variablem Belegungsumfang je Zeiteinheit jeweils durch Abwicklung nur eines einzigen entsprechenden Auftrages anhand der je Zeiteinheit tatsächlich belegten Poolelemente ermittelt und unter einem entsprechenden Auftragskennzeichen abgespeichert werden und daß die gespeicherten Benutzungsprofile anhand des mit einer Anfrage verbundenen Auftragskennzeichens bei Bedarf aufgerufen werden.

19. Verfahren nach einem der Ansprüche 1 bis 18 in Verbindung mit einem aus Funktions- und Protokollschichten (z.B. entsprechend dem ISO-Referenzmodell) aufgebauten strukturierten Kommunikationsnetzwerk, wobei die zwischen einer Verarbeitungsquelle (VA-Q) und einer Verarbeitungssenke (VA-S) auszutauschenden Nettodaten jeweils nacheinander durch die verschiedenen Funktionsschichten geschleust werden und zusätzliche Steuerinformationen je Funktionsschicht die Zusammenarbeit der einander entsprechenden Funktionsschichten regeln, dadurch gekennzeichnet, daß die mit einer Anfrage (ANF) verbundenen Angaben zur Ableitung des jeweiligen Benutzungsprofiles (BP) entsprechend dem Ursprung der Anfrage von der der Anwendung zugeordneten obersten Funktionsschicht (z.B. S7) einer Verarbeitungseinheit (VA-Q) ausgehen, daß abhängig von den vorgegebenen möglichen Zuordnungen zwischen den einzelnen Funktionsschichten und den von diesen benötigten gleichartigen Poolelementen (gemeinsame Gruppe für alle Funktionsschichten bzw. Teilgruppen für einzelne oder mehrere der vorhandenen Funktionsschichten) innerhalb jeder Verarbeitungseinheit (z.B. VA-Q) eine oder mehrere selbständige Teilgruppen von Poolelementen gebildet werden, die jeweils für sich verwaltet und disponiert werden, und daß bei mehreren Teilgruppen von Poolelementen je Verarbeitungseinrichtung (z.B. VA-Q) mit den Anfragen auch die Angaben für die Ableitung des Benutzungsprofils (BP) allen Teilgruppen zur Verfügung gestellt werden.

20. Anordnung zur Durchführung der Verfahren nach einem der Ansprüche 1 bis 19, gekennzeichnet
– durch einen aktuellen Dispositionsspeicher (DIS-SP), dessen einzelne Speicherabschnitte (1 bis m) jeweils einem Dispositionszeitelement (DZE ...) entsprechend die Anzahl (DW-DEZ...) der für diesen Zeitraum disponierten Poolelemente gespeichert enthalten, wobei alle gespeicherten Werte das Gesamtbenutzungsprofil (GBP) bilden,
– durch eine Einrichtung (SUM) zur Bildung eines resultierenden Gesamtbenutzungsprofils (GBP-R) aus dem im Dispositionsspeicher (DIS-SP) enthaltenen Gesamtbenutzungsprofil (GBP) und dem der zu bearbeitenden Anfrage (ANF) zugehörigen Benutzungsprofil (BP),
– durch eine Überwachungseinrichtung (ÜB-E) zur Überwachung des resultierenden Gesamtbenutzungsprofils (GBP-R) auf Überschreitung eines vorgegebenen Grenzwertes (GW) durch einen der je Dispositionszeitelement (DZE...) anfallenden Werte und
– durch eine Steuereinrichtung (VW-ST) zur Entgegennahme der Anfragen (ANF) und zur Steuerung des Dispositionsvorganges.

21. Anordnung nach Anspruch 20, gekennzeichnet durch einen Benutzungsprofilgenerator (BP-GEN), der anhand der mit der Anfrage (ANF) verbundenen Angaben (AK,M) das zugehörige Benutzungsprofil (BP) bereitstellt.

22. Anordnung nach Anspruch 21, dadurch gekennzeichnet, daß der Benutzungsprofilgenerator (BP-GEN) einen Benutzungsprofilspeicher (BS-SP) enthält, aus dem das jeweils benutzte Benutzungsprofil (BP) anhand eines Auftragskennzeichens (AK) auslesbar ist.

23. Anordnung nach Anspruch 21 oder 22, dadurch gekennzeichnet, daß der Benutzungsprofil-Generator (BP-GEN) ein Schieberegister (REG) mit einer der Anzahl (m) der Dispositionszeitelemente (z.B. DZE1 bis DZEm) entsprechenden Anzahl von Registerstufen für die Bereitstellung des Benutzungsprofils (BP) aufweist, in dem das jeweils bereitgestellte Benutzungsprofil bei einer vorausschauenden Disposition schrittweise in Richtung nachfolgend geltender Dispositionszeitelemente (DZE...) verschiebbar ist, bis das Ende des Benutzungsprofils die letzte Registerstufe erreicht hat.

24. Anordnung nach einem der Ansprüche 20 bis 23, dadurch gekennzeichnet, daß die Einrichtung (SUM) zur Bildung des resultierenden Gesamtbenutzungsprofiles (GBP-R) aus einer der Anzahl (m) der Dispositionszeitelemente (DZE...) entsprechenden Anzahl von Addierern (AD1 bis ADm) besteht, denen jeweils die dem zugehörigen Dispositions-Zeitelement (z.B.) DZE1) zugehörigen Werte des Benutzungs- und des Gesamtbenutzungsprofils (BP und GBP) zugeführt werden und deren Ausgänge sowohl mit den entsprechenden Eingängen der Überwachungseinrichtung (ÜB-E) als auch mit den Schreibeingängen des aktuellen Dispositionsspeichers (DIS-SP) verbunden sind, so daß das gespeicherte Gesamtbenutzungsprofil (GBP) durch das resultierende Gesamtbenutzungsprofil (GBP-R) ersetzt werden kann, und daß die Überwachungseinrichtung (ÜB-E) zur Überwachung des resultierenden Gesamtbenutzungsprofiles (GBP-R) aus einer der Anzahl (m) der Dispositionszeitelemente (DZE...) entsprechenden Anzahl von Vergleichern (V1 bis Vm) besteht, die die von den jeweils vorgeschalteten Addierern (AD1 bis ADm) gelieferten Ergebnisse mit dem vorgegebenen Grenzwert (GW...) vergleichen.

25. Anordnung nach Anspruch 24, dadurch gekennzeichnet, daß die Vergleicher (V1 bis Vm) lediglich das Überschreiten des Grenzwertes (GW...) anzeigen und daß die entsprechenden Signalausgänge (>) über ein ODER-Glied (OR) zusammengefaßt der zuständigen Steuerung (VW-ST) signalisieren, ob die Anfrage (ANF) abzuweisen oder zu berücksichtigen ist.

26. Anordnung nach einem der Ansprüche 20 bis 25, dadurch gekennzeichnet, daß ein gesonderter Grenzwertspeicher (GW-SP) vorgesehen ist, der je Dispositionszeitelement (z.B. DEZi) einen Grenzwert (GWi) gespeichert enthält.

27. Anordnung nach einem der Ansprüche 20 bis 26, gekennzeichnet durch Einrichtungen zur Erfassung der Anzahl der je Zeiteinheit jeweils belegten Poolelemente und zum Vergleich der Anzahl der für dieses Zeitelement disponierten Poolelemente mit der Anzahl der belegten Poolelemente und durch Einrichtungen zur Korrektur der Anzahl der für die nachfolgende Zeiteinheit disponierbaren Poolelemente abhängig vom Ergebnis des durchgeführten Vergleichs.

**Claims**

1. Method for controlling the access to a group of shared devices as pooled elements (e.g. connection lines, memory units, work time units of a processor) in a data processing system or in a communication system, in which in each case facilities functioning as a source (e.g. user stations) indicate their acces request by means of a request (ANF) to a management controller managing the pooled elements, the management controller (VW-ST), when the required pooled elements are available, reserves the latter for the requesting facility and reports the readiness to the requesting facility and the requesting facility executes the desired access only after this acknowledgement (RM+), characterized in that with each request (ANF) information is connected from which a temporal utilization profile (BP) with constant or variable seizure scope can be derived for the required pooled elements, in that, depending on this utilization profile (BP) of the individual requests (ANF), the management controller creates an overall utilization profile (GBP) for all managed pooled elements by overlaying the individual utilization profiles (BP), from which overall utilization profile the projected temporal course of the seizure of all managed pooled elements can be derived, in that for each request (ANF) the utilization profile (BP) associated therewith is overlaid on the existing overall utilization profile (GBP) and it is checked whether the load resulting from the new overall utilization profile (GBP-R) of all managed pooled elements can be handled, and in that only if this check has a positive result is the current request (ANF) answered with a positive acknow-ledgement (RM+), the required pooled elements initially being merely allocated by adjusting the overall utilization profile (GBP) and only subsequently, according to the actual requirement, assigned to the task initiated by the request and seized.

2. Method according to Claim 1, characterized in that requests (ANF) which cannot be answered immediately with a positive acknowledgement (RM+) are rejected with a negative acknowledgement (RM–) and in that the request (ANF) must be repeated by the requesting facility until a positive acknowledgement (RM+) is received.

3. Method according to Claim 2, characterized in that requests (ANF) which cannot be answered immediately with a positive acknowledgement (RM+) are subjected to an advance allocation check with step-by-step displacement of the utilization profile (BP) along the overall utilization profile (GBP) and in that, in the case of a request to be accommodated in the existing allocation period, instead of the negative acknowledgement (RM–) a positive acknowledgement (RM+) is issued with a time duration, resulting from the temporal displacement of the utilization profile (BP) with respect to the overall utilization profile (GBP), as time information (ZA) which indicates to the requesting facility that the desired access can be executed with a corresponding time delay.

4. Method according to Claim 1, characterized in that requests (ANF) which cannot be answered immediately with a positive acknowledgement (RM+) are temporarily stored and checked at periodic intervals until a positive acknowledgement (RM+) is possible.

5. Method according to Claim 4, characterized in that the request (ANF) is only temporarily stored if an advance allocation check has led to a positive result, whereas in the case of a negative check result the request is rejected with a negative acknowledgement (RM–).

6. Method according to Claim 4 or 5, characterized in that the processing priority of the temporarily stored requests (ANF-SP) is continuously increased depending on a predetermined number of a negative checks.

7. Method according to one of Claims 1 to 6, characterized in that the acceptance of requests (ANF) for the allocation check is blocked when the overall utilization profile (GBP) indicates the seizure of all allocatable pooled elements for a predetermined time.

8. Method according to one of Claims 1 to 7 for a plurality of separate groups of pooled elements functioning in series, in particular for groups of pooled elements in various nodes (e.g. TK1) of a communication network in which the requests (D-ANF) are forwarded one after the other from group to group to the desired destination group (VA-S) and an acknowledgement (D-RM+) is only returned after acceptance of the request (D-ANF) from all groups on the route to the destination group (VA-S) from the latter in the opposite direction to the requesting facility (VA-Q), characterized in that, by means of the information associated with a request (D-ANF) for deriving the utilization profile (BP), the acceptance possibility of the request is checked for each group (e.g. TK1) of pooled elements one after the other with reference to the overall utilization profile (GBP) present in each case, and the request (D-ANF) is only forwarded to the next group (e.g. TKn) in the case of a positive check result (DP+), without the pooled elements required for the request (D-ANF) initially being allocated by changing the overall utilization profile (GBP) present in each case, and in that only the positive acknowledgement (D-RM+) initiated by the destination group (VA-S) after allocation (DP+) has been made initiates the necessary adjustment of the associated overall utilization profiles (GBP) one after the other in the individual groups (e.g. TK1 to TKn), until the acknowledgement reaches the requesting facility (VA.-Q).

9. Method according to Claim 8, characterized in that, during the allocation, in the individual groups (e.g. TKn) of pooled elements the time displacements or changes to the original utilization profile (BP) of a current request (D-ANF) resulting from the transmission and processing in the respective preceding groups (e.g. TK1) are taken into account.

10. Method according to Claim 8 or 9, characterized in that, at least in the groups (e.g. TKn, VA-S) of pooled elements following the first group (e.g. TK1) each request (D-ANF) which is not immediately acceptable is temporarily put in an intermediate memory and checked at periodic intervals.

11. Method according to Claim 10, characterized in that with each check (DP–) with a negative result of a temporarily stored request (D-ANF), the processing priority of this request is increased and in that the processing priority thus achieved is effective for all subsequent groups of pooled elements.

12. Method according to Claim 11, characterized in that the processing priority assigned last to the requests (D-ANF) is transferred to the acknowledgement (D-RM+) of the destination group (VA-S).

13. Method according to one of Claims 8 to 12, characterized in that the acknowledgement (D-RM+) generated by the destination group (VA-S) is provided with information on the allocation instant, in that, in the case of an allocation which cannot be executed owing to the acknowledgement (D-RM+) in one of the groups (e.g. TK1), the acknowledgement (D-RM+) is converted into a specially marked new request (D-ANF-W), to which the information on the allocation instant of the destination group (VA-S) is added, and in that in the groups (e.g. TKn, VA-S) affected by the repeated request (D-ANF-W), by means of the information added to the request on the allocation instant and the associated utilization profile, the as yet unused residual utilization profile of the request is determined and the overall utilization profile given is adjusted accordingly before the request is forwarded or, respectively, a renewed allocation is made in the destination group (VA-S) and a new acknowledgement(D-RM+) is issued.

14. Method according to one of Claims 1 to 13, characterized in that, for the allocation of the pooled elements of a group via a predetermined duration, in each case a number (e.g. 15) corresponding to this duration (T) is used in each case by allocation time elements (DZE) each corresponding to a predetermined time unit ($\Delta$T) and each allocation time element (DZE) is allocated in each case the number (DW) of the projected seized pooled elements for this time unit, in that after expiry of each time unit, the associated allocation time element (DZE1) at the beginning of the time element sequence (e.g. DZE1 to DZEm) is replaced by a new one (DZEm+1) at the end of the sequence, in that each case the utilization profile (BP) associated with one request (ANF) is divided up in accordance with the allocation time elements (DZE) and the number, resulting in each case thereby per allocation time element, of required pooled elements beginning with a predetermined allocation time element (e.g. DZE1) of the existing overall utilization profile (GBP) for all allocation time elements is added individually in each case to the associated number of already allocated pooled elements per allocation time element, in that the total number resulting thereby for each allocation time element, of required pooled elements is in each case compared with a predetermined limit value (GW...) for the total available pooled elements and in that when this limit value is exceeded for only one of the allocation time elements (e.g. DZEi) of the resulting overall utilization profile (GBP-R) the current allocation operation is terminated.

15. Method according to Claim 14, characterized in that temporarily stored requests (ANF-SP) as a result of a negative allocation operation run are checked only once during each time unit ($\Delta$T = DZE).

16. Method according to Claim 14 or 15, characterized in that the allocated pooled elements assigned to the allocation time element (e.g. DZE1), at the start of the time element sequence (DZE1 to DZEm), which allocation time element ceases to apply after expiry of each time unit ($\Delta$T), are deleted in the overall utilization profile (GBP).

17. Method according to Claim 14 or 15, characterized in that in each case at the end of a time unit, a correction value is derived from the relation between the number of pooled elements actually seized during this time unit and the number of the pooled elements allocated for the associated allocation time element, and in that on the basis of this correction value the number, associated with the subsequent allocation time element, of still allocatable pooled elements is corrected.

18. Method according to one of Claims 1 to 17, characterized in that at least the frequently occurring utilization profiles with variable seizure scope per time unit are determined in each case by processing only a single corresponding job with reference to the pooled elements corresponding job identifier and in that the stored utilization profiles can be called up as required by means of the job identifier associated with a request.

19. Method according to one of Claims 1 to 18 in conjunction with a structured communications network built up from function layers and protocol layers (e.g. corresponding to the ISO reference model), the net data to be exchanged between a processing source (VA-Q) and a processing sink (VA-S) in each case being passed one after the other through the various function layers and additional control information per function layer controlling the interaction of the mutually corresponding function layers, characterized in that the information associated with a request (ANF) for deriving the respective utilization profile (BP) starts from a processing unit (VA-Q) in accordance with the source of the request from the uppermost function layer (e.g. S7) assigned to the application, in that, depending on the predetermined possible assignments between the individual function layers and the similar pooled elements (common group for all function layers or subgroups for individual or several of the existing function layers) required by the former within each processing unit (e.g. VA-Q), one or more independent subgroups of pooled elements are formed which are in each case managed and allocated independently, and in that in the case of several subgroups of pooled elements per processing facility (e.g. VA-Q), with the requests the information for the derivation of the utilization profile (BP) is also made available to all subgroups.

20. Arrangement for carrying out the methods according to one of Claims 1 to 19, characterized by
– a current allocation memory (DIS-SP), each individual memory sections (1 to m) of which contain stored the number (DW-DEZ...) of the pooled elements allocated for this period corresponding to in each case one allocation time element (DZE...), all stored values forming the overall utilization profile (GBP),
– a facility (SUM) for forming a resulting overall utilization profile (GBP-R) from the overall utilization profile (GBP) contained in the allocation memory (DIS-SP) and from the utilization profile (BP) associated with the request (ANF) to be processed,
– a monitoring facility (ÜB-E) for monitoring the resulting overall utilization profils (GBP-R) to detect whether a predetermined limit value (GW) is exceeded by one of the values occurring for each allocation time element (DZE...) and
– a control facility (VW-ST) for receiving the requests (ANF) and for controlling the allocation operation.

21. Arrangement according to Claim 20, characterized by a utilization profile generator (BP-GEN) which provides the associated utilization profile (BP) by means of the information (AK, M) associated with the request (ANF).

22. Arrangement according to Claim 21, characterized in that the utilization profile generator (BP-GEN) contains an utilization profile memory (BS-SP), from which the respective utilization profile (BP) used can be read out by means of a job identifier (AK).

23. Arrangement according to Claim 21 or 22, characterized in that the utilization profile generator (BP-GEN) has a shift register (REG) with a number of register levels corresponding to the number (m) of the allocation time elements (e.g. DZE1 to DZEm) for the provision of the utilization profile (BP), in that the respective utilization profile provided can be shifted in the case of an advance allocation step-by-step in the direction of subsequently valid allocation time elements (DZE...), until the end of the utilization profile has reached the last register level.

24. Arrangement according to one of Claims 20 to 23, characterized in that the facility (SUM) for forming the resulting overall utilization profile (GBP-R) consists of a number of adders (AD1 to ADm) corresponding to the number (m) of the allocation time elements (DZE...), which adders are supplied in each case with the values associated in each case with the associated allocation time element (e.g. DZE1), of the utilization profile and the overall utilization profile (BP and GBP), and their outputs are connected both with the corresponding inputs of the monitoring facility (ÜB-E) and with the write inputs of the current allocation memory (DIS-SP) so that the stored overall utilization profile (GBP) can be replaced by the resulting overall utilization profile (GBP-R) and in that the monitoring facility (ÜB-E) for monitoring the resulting overall utilization profile (GBP-R) consists of a number of comparators (V1 to Vm) corresponding to the number (m) of the allocation time elements (DZE...), which comparators compare the results supplied from the respective upstream adders (AD1 to ADm) with the predetermined limit value (GW...).

25. Arrangement according to Claim 24, characterized in that the comparators (V1 to Vm) merely indicate that the limit value (GW...) has been exceeded and in that the corresponding signal outputs (>), combined via an OR element (OR) to the responsible controller (VW-ST), signal whether to request (ANF) is to be rejected or to be considered.

26. Arrangement according to one of Claims 20 to 25, characterized in that a separate limit value memory (GW-SP) is provided which contains stored one limit value (GWi) for each allocation time element (e.g. DEZi).

27. Arrangement according to one of Claims 20 to 26, characterized by facilities for recording the number of pooled elements seized per time unit and, for comparing, the number of the pooled elements allocated for this time element with the number of the seized pooled elements, and by facilities for correcting the number of the allocatable pooled elements for the subsequent time unit depending on the result of the comparison made.

## Revendications

1. Procédé pour commander l'accès à un groupe de dispositifs utilisables en commun en tant qu'éléments d'un pool (par exemple des lignes de jonction, des unités de mémoire, des unités de commande des temps de travail d'un processeur) dans un système de traitement de données ou de communication, dans lequel des dispositifs (par exemple des postes d'utilisateurs) opérant respectivement en tant que sources signalent leur demande d'accès par une demande (ANF) dans un dispositif de commande de gestion gérant les éléments du pool, le dispositif de commande de gestion (VW-ST) réserve, dans le cas où les éléments de pool nécessaires sont disponibles, ces éléments pour le dispositif demandeur et signale la mise à l'état prêt du dispositif demandeur, et ce dernier exécute l'accès désiré, uniquement après cette signalisation en retour (RM+), caractérisé par le fait qu'à chaque demande (ANF) sont associées des indications, à partir desquelles peut être dérivé un profil temporel d'utilisation (BP) avec un volume constant ou variable d'occupation pour les éléments nécessaires du pool, que le dispositif de commande de gestion établit, en fonction de ce profil d'utilisation (BP) des différentes demandes (ANF) pour tous les éléments du pool gérés, au moyen d'une superposition des différents profils d'utilisation (BP), un profil global d'utilisation (GBP), à partir duquel peut être dérivée la variation prévisible dans le temps de l'occupation de tous les éléments gérés du pool, que pour chaque demande (ANF), le profil d'utilisation (BP), qui y est lié, est superposé au profil global existant d'utilisation (GBP) et qu'on contrôle si la charge résultant du nouveau profil global d'utilisation (GBP-R) de tous les éléments gérés du pool peut être prise en charge, et que seulement dans le cas d'un résultat positif de ce contrôle, une réponse est donnée à la demande en cours (ANF) au moyen d'une signalisation en retour positive (RM+), auquel cas les éléments nécessaires du pool sont simplement mis à disposition tout d'abord au moyen d'une adaptation du profil global d'utilisation (GBP) et sont, ensuite seulement, associés à la tâche déclenchée par la demande, conformément au besoin effectif et sont occupés.

2. Procédé suivant la revendication 1, caractérisé par le fait que des demandes (ANF), auxquelles une réponse n'a pas été donnée immédiatement avec une signalisation en retour positive (RM+), sont rejetées avec une signalisation en retour négative (RM–) et que la demande (ANF) doit être répétée par le dispositif demandeur jusqu'à l'obention d'une signalisation en retour positive (RM+).

3. Procédé suivant la revendication 2, caractérisé par le fait que les demandes (ANF), auxquelles une réponse n'a pas été donnée immédiatement avec une signalisation en retour positive (RM+), sont soumises à un contrôle de mise à disposition, exécuté de façon prévisionnelle, avec un décalage pas-à-pas du profil d'utilisation (BP) le long du profil global d'utilisation (GBP), et que dans le cas d'une demande devant être insérée dans l'intervalle de temps de mise à disposition existant, à la place de la signalisation en retour négative (RM–), une signalisation en retour positive (RM+) est délivrée avec une durée résultant du décalage temporel du profil d'utilisation (BP) par rapport au profil global d'utilisation (GBP), en tant qu'indication de temps (ZA) indiquant au dispositif demandeur que l'accès désiré peut être obtenu avec un retard correspondant.

4. Procédé suivant la revendication 1, caractérisé par le fait que des demandes (ANF), pour lesquelles une réponse n'a pas été donnée immédiatement avec une signalisation en retour positive (RM+), sont mémorisées temporairement et sont contrôlées à des intervalles périodiques jusqu'à ce qu'une signalisation en retour positive (RM+) soit possible.

5. Procédé suivant la revendication 4, caractérisé par le fait qu'une mémorisation intermédiaire de la demande (ANF) se produit uniquement lorsqu'un contrôle de mise à disposition, exécuté de façon prévisionnelle, a conduit à un résultat positif, tandis que dans le cas d'un résultat négatif du contrôle, la demande est rejetée avec une signalisation en retour négative (RM–).

6. Procédé suivant la revendication 4 ou 5, caractérisé par le fait que la priorité de traitement des demandes (AFN-SP) mémorisées temporairement est accru de façon continue en fonction d'un nombre prédéterminé de contrôles négatifs.

7. Procédé suivant l'une des revendications 1 à 6, caractérisé par le fait que l'acceptation de demandes (ANF) pour le contrôle de mise à disposition est interrompue lorsque le profil global d'utilisation (GBP) permet d'identifier, pour un intervalle de temps prédéterminé, l'occupation de tous les éléments du pool dont on peut disposer.

8. Procédé suivant l'une des revendications 1 à 7 pour plusieurs groupes séparés, agissant en série, d'éléments du pool, notamment pour des groupes d'éléments du pool situés dans des nœuds différents (par exemple TK1) d'un réseau de communication, dans lequel les demandes (D-ANF) sont retransmises successivement d'un groupe au suivant jusqu'au groupe de destination désiré (VA-S) et une signalisation en retour (D-RM+) n'est renvoyée qu'aprés l'acceptation de la demande (D-ANF) de tous les groupes situés sur le trajet aboutissant jusqu'au groupe de destination (VA-S), à partir de ce dernier dans le sens opposé jusqu'au dispositif demandeur (VA-Q), caractérisé par le fait que sur la base des indications liées à une demande (D-ANF) pour l'obtention du profil d'utilisation (BP), la possibilité d'acceptation de la demande est contrôlée sur la base du profil global d'utilisation (GBP) respectivement présent, successivement pour les différents groupes (par exemple TK1) d'éléments du pool, et la demande (D-ANF) n'est retransmise au groupe suivant (par exemple TKn) que dans le cas d'un résultat positif du contrôle (DP+), sans que les éléments du pool nécessaires pour la demande (D-ANF) soient mis tout d'abord à disposition moyennant une modification du profil global d'utilisation (GBP) respectivement présent, et que seule la signalisation en retour positif (D-RM+) déclenchée par le groupe de destination (VA-S) après l'exécution d'une mise à disposition (DP+) déclenche successivement dans les différents groupes (par exemple TK1 à TKn) l'adaptation nécessaire des profils globaux d'utilisation (GBP) associés, jusqu'à ce que la signalisation en retour atteigne le dispositif demandeur (VA-Q).

9. Procédé suivant la revendication 8, caractérisé par le fait que dans le cas de la mise à disposition dans les différents groupes (par exemple TKn) d'éléments du pool, les décalages temporels ou modifications, conditionnés par la transmission et le traitement dans les groupes respectivement précédents (par exemple TK1), du profil initial d'utilisation (BP) d'une demande en cours (D-ANF) sont pris en compte.

10. Procédé suivant la revendication 8 ou 9, caractérisé par le fait qu'au moins dans les groupes (par exemple TKn, VA-S) d'éléments du pool, qui sont disposés à la suite du premier groupe (par exemple TK1), chaque demande (D-ANF), qui ne peut pas être acceptée immédiatement, est mémorisée temporairement d'une manière transitoire et est contrôlée à des intervalles de temps périodiques.

11. Procédé suivant la revendication 10, caractérisé par le fait que lors de chaque contrôle (DP–), aboutissant à un résultat négatif, d'une demande (D-ANF) mémorisée temporairement, la priorité de traitement de cette demande est accrue et que la priorité de traitement alors obtenue devient effective pour tous les groupes suivants d'éléments du pool.

12. Procédé suivant la revendication 11, caractérisé par le fait que la priorité de traitement associée en dernier lieu aux demandes (D-ANF) est transmise au groupe de destination (VA-S) lors de la signalisation en retour (D-RM+).

13. Procédé suivant l'une des revendications 8 à 12, caractérisé par le fait qu'on affecte une indication concernant l'instant de mise à disposition à la signalisation en retour (DM-RM+) produite par le groupe de destination (VA-S), que dans le cas d'une mise à disposition ne pouvant pas être exécutée sur la base de la signalisation en retour (D-RM+) dans l'un des groupes (par exemple TK1), la signalisation en retour (D-RM+) est convertie en une nouvelle demande (D-ANF-W) caractérisée d'une manière particulière, à laquelle peut être jointe l'indication concernant l'instant de mise à disposition du groupe de destination (VA-S), et que dans les groupes (par exemple TKn, VA-S) concernés par la demande (D-ANF-W) répétée, le profil restant d'utilisation, non encore utilisé, de la demande est déterminé sur la base de l'indication adjointe à la demande et concernant l'instant de mise à disposition et le profil associé d'utilisation, et que le profil global d'utilisation donné est réglé de façon correspondante avant que la demande soit retransmise, ou bien une nouvelle mise à disposition est réalisée dans le groupe de destination (VA-S) et une nouvelle signalisation en retour (D-RM+) est délivrée.

14. Procédé suivant l'une des revendications 1 à 13, caractérisé par le fait que pour la mise à disposition des éléments du pool d'un groupe pendant une durée prédéterminée, on utilise un nombre (par exemple 15), correspondant à cette durée (T), d'intervalles de temps de mise à disposition (DZE) correspondant à une unité de temps prédéterminée (ΔT), et qu'à chaque intervalle de temps de mise à disposition (DZE) on associe respectivement le nombre (DW) des éléments du pool occupés de façon prévisionnelle pendant cette unité de temps, l'intervalle de temps associé de mise à disposition (DZE) présent au début de la suite des intervalles de temps (par exemple DZE1 à DZEm) est remplacé par un nouvel intervalle de temps (DZEm+1) situé à la fin de la suite d'intervalles de temps, que le profil d'utilisation (BP) associé respectivement à une demande (ANF) est subdivisé conformément aux intervalles de temps de mise à disposition (DZE) et que le nombre, que l'on obtient de ce fait pour chaque intervalle de temps de mise à disposition, d'éléments nécessaires du pool est ajouté individuellement, en commençant par un intervalle de temps prédéterminé de mise à disposition (par exemple DZE1) du profil global d'utilisation (GBP) existant, pour tous les intervalles de temps de mise à disposition, respectivement au nombre associé d'éléments du pool déjà rendus disponibles, et ce pour chaque intervalle de temps de mise à disposition, que le nombre total, obtenu alors pour chaque intervalle de temps de mise à disposition, d'éléments nécessaires du pool est comparé respectivement à une valeur limite prédéterminée (GW...) pour les éléments du pool globalement disponibles, et que le processus continu de mise à disposition est interrompu dans le cas du dépassement de cette valeur limite pendant seulement l'un des intervalles de temps de mise à disposition (par exemple DZEi) du profil global d'utilisation (GBP-R) résultant.

15. Procédé suivant la revendication 14, caractérisé par le fait que des demandes (ANF-SP) mémorisées temporairement sur la base d'un processus de mise à disposition ayant fourni un résultat négatif ne sont contrôlées qu'une seule fois pendant cette unité de temps ($\Delta T = DZE$).

16. Procédé suivant la revendication 14 ou 15, caractérisé par le fait que les éléments du pool mis à disposition, associés au début de la suite (DZE1 à DZEm) des intervalles de temps à l'intervalle de temps (par exemple DZE1) supprimés après l'écoulement de chaque unité de temps ($\Delta T$) sont effacés du profil global d'utilisation (GBP).

17. Procédé suivant la revendication 14 ou 15, caractérisé par le fait que respectivement à la fin d'une unité de temps, une valeur de correction est dérivée de la relation entre le nombre des éléments du pool occupés effectivement pendant cette unité de temps, et le nombre des éléments du pool mis à disposition pour l'intervalle de temps associé de mise à disposition, et que le nombre, associé à l'intervalle de temps suivant de mise à disposition, d'éléments du pool non encore mis à disposition est corrigé sur la base de cette valeur de correction.

18. Procédé suivant l'une des revendications 1 à 17, caractérisé par le fait qu'au moins les profils d'utilisation, qui apparaissent fréquemment et possèdent un volume variable d'occupation dans chaque unité de temps, sont déterminés respectivement par l'exécution d'une seul tâche correspondant sur la base des éléments du pool occupés effectivement dans chaque unité de temps, et sont mémorisés sans un indicatif de tâche correspondant et que les profils d'utilisation mémorisés sont appelés le cas échéant sur la base de l'indicatif de tâche associé à une demande.

19. Procédé suivant l'une des revendications 1 à 18 considéré en liaison avec un réseau de communication structuré, constitué sous la forme de plans de fonctions de plans de protocoles (par exemple conformément au modèle de référence ISO), selon lequel les données nettes, qui doivent être échangées entre une source de données de traitement (DA-Q) et un récepteur de données de traitement (VA-S) sont transférées en passant successivement dans les différents plans de fonctions, et des informations supplémentaires de commande règlent, pour chaque plan de fonctions, la coopération des plans de fonctions qui se correspondent entre eux, caractérisé par le fait que les indications associées à une demande (ANF) pour l'obtention du profil respectif d'utilisation (BP) partent, conformément à l'origine de la demande, du plan supérieur de fonctions (par exemple S7), associé à l'utilisation, d'une unité de traitement (VA-Q), qu'un ou plusieurs groupes partiels indépendants d'éléments du pool, qui sont respectivement gérés et mis à disposition chacun pour soi, sont formés en fonction des associations possibles prédéterminées entre les différents plans de fonctions et les éléments similaires du pool nécessités par ces plans de fonctions (groupe commun pour tous les plans de fonctions ou pour tous les groupes partiels pour des plans individuels de fonctions ou pour plusieurs des plans de fonctions individuels existants) à l'intérieur de chaque unité de traitement (par exemple VA-Q), et que dans le cas de plusieurs groupes partiels d'éléments du pool pour chaque dispositif de traitement (par exemple VA-Q), des indications concernant l'obtention du profil d'utilisation (BP) sont également, mises à la disposition de tous les groupes partiels, conjointement avec les demandes.

20. Dispositif pour la mise en œuvre du procédé suivant l'une des revendications 1 à 19, caractérisé

– par une mémoire réelle de mise à disposition (DIS-SP), dont les différentes sections (1 à m) contiennent à l'état mémorisé, conformément à un intervalle de temps respectif de mise à disposition (DZE...), le nombre (DW-DEZ...) des éléments du pool mis à disposition pour cet intervalle de temps, toutes les valeurs mémorisées formant le profil global d'utilisation (GBP)

– par un dispositif (SUM) servant à former un profil global d'utilisation résultant (GBP-R) à partir du profil global d'utilisation (GBP) contenu dans la mémoire de mise à disposition (DIS-SP) et du profil d'utilisation (BP) associé à la demande (ANF) devant être traitée

– par un dispositif de contrôle (ÜB-E) servant à contrôler le profil global d'utilisation résultant (GBP-R) pour savoir si l'une des valeurs apparaissant dans chaque intervalle de temps de mise à disposition (DZE...) dépasse une valeur limite prédéterminée (GW), et

– par un dispositif de commande (VW-ST) servant à accepter les demandes (ANF) et à commander le processus de mise à disposition.

21. Dispositif suivant la revendication 20, caractérisé par un générateur (BP-GEN) du profil d'utilisation, qui délivre le profil associé d'utilisation (BP) sur la base des indications (AK, M) associées à la demande (ANF).

22. Dispositif suivant la revendication 21, caractérisé par le fait que le générateur (BP-GEN) du profil d'utilisation contient une mémoire (BS-SP) de profils d'utilisation, à partir duquel le profil d'utilisation (BP) respectivement utilisé peut être lu sur la base d'un identificateur d'ordre (AK).

23. Dispositif suivant la revendication 21 ou 22, caractérisé par le fait que le générateur (BP-GEN) du profil d'utilisation comporte un registre à décalage (REG) possédant un nombre, correspondant au nombre (m) des intervalles de temps de mise à disposition (par exemple DZE1 à DZEm), d'étages pour la mise à disposition du profil d'utilisation (BP), registre dans lequel le profil d'utilisation respectivement mis à disposition est décalé pas-à-pas dans la direction d'intervalles de temps de mise à disposition (DZE...) valables ultérieurement, dans le cas d'une mise à disposition exécutée par précaution, jusqu'à ce que la fin du profil d'utilisation ait atteint le dernier étage du registre.

24. Dispositif suivant les revendications 20 à 23, caractérisé par le fait que le dispositif (SUM) servant à former le profil global d'utilisation résultant (GBP-R) est constitué par un nombre, correspondant au nombre (m) des intervalles de temps de mise à disposition (DZE...), d'additionneurs (AD1 à ADm), auxquels sont envoyées respectivement les valeurs du profil d'utilisation et du profil global d'utilisation (BP et GBP), associées à l'intervalle de temps associé de mise à disposition (par exemple (DZE1), et dont les sorties sont reliées aussi bien aux entrées correspondantes du dispositif de contrôle (ÜB-E) qu'aux entrées d'enregistrement de la mémoire réelle de mise à disposition (DIS-SP), de sorte que le profil global d'utilisation (GBP) mémorisé peut être remplacé par le profil global d'utilisation résultant (GBP-R), et que le dispositif de contrôle (ÜB-E) servant à contrôler le profil global d'utilisation résultant (GBP-R) est constitué par un nombre, correspondant au nombre m des intervalles de temps de mise à disposition (DZE...), de comparateurs (V1 à Vm), qui comparent les résultats, fournis par les additionneurs (AD1 à ADm) branchés respectivement en amont, à la valeur limite prédéterminée (GW...).

25. Dispositif suivant la revendication 24, caractérisé par le fait que les comparateurs (V1 à Vm) indiquent uniquement le dépassement de la valeur limite (GW...) et que les sorties correspondantes des signaux (>) réunies par l'intermédiaire d'un circuit OU (OR) signalement au dispositif de commande associé (VW-ST) si la demande (ANF) doit être rejetée ou prise en compte.

26. Dispositif suivant l'une des revendications 20 à 25, caractérisé par le fait qu'il est prévu une mémoire particulière de valeurs limites (GW-SP) dans laquelle une valeur limite (GWi) est mémorisée pour chaque intervalle de temps de mise à disposition (par exemple DEZi).

27. Dispositif suivant l'une des revendications 20 à 26, caractérisé par des dispositifs servant à déterminer le nombre des éléments du pool respectivement occupés pendant une unité de temps et à comparer le nombre des éléments du pool mis à disposition pendant cet intervalle de temps au nombre des éléments du pool occupés, et par des dispositifs servant à corriger le nombre des éléments du pool pouvant être mis à disposition pendant l'unité de temps suivante, en fonction du résultat de la comparaison exécutée.

EP 0 173 171 B1

## FIG 1

## FIG 2

## FIG 3

FIG 4

FIG 5

FIG 6

FIG 7

EP 0 173 171 B1

**FIG 8**

EP 0 173 171 B1

# FIG 9

VA-Q — D-ANF → TK 1 — D-ANF → TKn — D-ANF → VA-S

VA-Q ← D-RM+ — TK 1 ← D-RM+ — TKn ← D-RM+ — VA-S

# FIG 10

D-ANF
DP+
D-ANF
DP+
D-ANF
DP+
D

DP+
DP+
D-RM+
D

DP+
D-RM+
D

DP+
D-RM+
DAT

# FIG 11

D-ANF → DP
ZSP
DP+ — D-ANF → DP+ — D-ANF → DP+
DP+
DP+
D-RM+
D
D-RM+
D
DP-
D-RM+
D-ANF-W
D-/DP+
D-ANF-W
D-/
DP+
DP+
D-RM+
D
D-RM+
D

DP+
D-RM+
D
D-RM+
DAT

# FIG 12

EP 0 173 171 B1